# EUROPÄISCHE PATENTSCHRIFT

(11) **EP 2 272 698 B1**
(45) Veröffentlichungstag und Bekanntmachung des Hinweises auf die Patenterteilung: **01.07.2015**
(21) Anmeldenummer: 10168339.9
(22) Anmeldetag: 02.07.2010
(51) Int. Cl.: B60H 1/34

(54) **Luftausströmvorrichtung**
Air outlet nozzle
Buse d'écoulement d'air

(30) Priorität: 07.07.2009 DE 102009032175; 06.10.2009 DE 102009048409
(43) Veröffentlichungstag der Anmeldung: 12.01.2011
(73) Patentinhaber: MAHLE Behr GmbH & Co. KG, 70469 Stuttgart (DE)
(72) Erfinder: Benamira, Salah, 70499 Stuttgart (DE); Fritsche, Uwe, 71686 Remseck am Neckar (DE); Tidelski, Axel, 70771 Leinfelden-Echterdingen (DE); Ruge, Jason, Holly, MI 48442 (US); D'Angelo, Marco, 70469 Stuttgart (DE); Zeller, Kuno, 70469 Stuttgart (DE); Herbach, Armin, 95326 Kulmbach (DE); Stenzel, Markus, 96450 Coburg (DE)
(74) Vertreter: Grauel, Andreas

(56) Entgegenhaltungen:
- EP-A1- 1 800 918
- EP-A2- 1 207 062
- EP-A2- 1 712 384
- DE-B3- 10 226 441
- DE-U1-202005 012 570
- DE-U1-202007 010 190
- FR-A1- 2 809 349
- FR-A1- 2 881 084
- US-A1- 2005 239 391

## Beschreibung

Die Erfindung betrifft eine Luftausströmvorrichtung zum Ausströmen eines Luftstroms, mit mindestens einer verstellbaren Luftleiteinrichtung und mindestens einer verstellbaren Luftabsperreinrichtung.

Bei der Belüftung von geschlossenen Innenräumen, wie beispielsweise von Kraftfahrzeugen, wird ganz allgemein an einer oder an mehreren Steilen Luft angesaugt, aufgearbeitet und in den zu belüftetenden Innenraum abgegeben. Die Luftansaugung kann dabei sowohl von der Umgebung her und/oder zumindest zeitweise und/oder zumindest teilweise auch vom zu belüftenden Innenraum selbst (sogenannter Umluftbetrieb) her erfolgen. Die derart angesaugte Luft wird beispielsweise durch Erwärmen (Heizung), Abkühlen (Klimaanlagenbetrieb) und/oder durch Filtern (Entfernen von Schmutzpartikeln, Pollen und dergleichen) aufgearbeitet

Insbesondere bei der Belüftung von Kraftfahrzeugeninnenräumen werden in aller Regel mehrere Orte vorgesehen, an denen die aufgearbeitete Luft in den Kraftfahrzeuginnenraum hineinströmt. Beispielsweise werden heutzutage üblicherweise Luftzufuhröffnungen vorgesehen, welche in Richtung der Windschutzscheibe, in Richtung der Seitenscheiben, in Richtung des Fahrer-/Beifahrerfußraums hin gerichtet sind, sowie Luftzuführöffnungen, die im Bereich des Armaturenbretts vorgesehen sind und in Richtung des Fahrers/Beifahrers zielen. In Abhängigkeit von der Position der Luftabgabeöffnung sind dabei unterschiedliche Luftausströmcharakteristika erwünscht. So soll beispielsweise die Luftströmung in den Fußraum des Fahrers/Beifahrers hinein möglichst diffus erfolgen, um unerwünschte Luftzüge zu vermeiden, Bei einer Luftausströmung in Richtung Windschutzscheibe bzw. Seitenscheiben ist dagegen in der Regel ein gerichteter Luftstrom sinnvoll, beispielsweise um die betreffende Scheibe möglichst schnell abtauen zu können.

Bei Luftabgabeöffnungen, welche im Armaturenbrett positioniert sind, stellt sich die Aufgabe vielschichtiger dar. So ist es in Abhängigkeit der Umgebungsbedingungen und/oder in Abhängigkeit der persönlichen Präferenzen des Fahrers bzw, Beifahrers erwünscht, zu bestimmten Zeiten eine diffuse Luftausströmung, zu anderen Zeiten jedoch eine gerichtete Luftausströmung (sogenannter Spot-Belüftungsbetrieb) zur Verfügung zu stellen.

Um derartigen hohen Komfortansprüchen zu genügen ist es grundsätzlich möglich, zwei unterschiedliche Arten von Luftausströmerdüsen vorzusehen, nämlich einerseits Spot-Luftausströmerdüsen, andererseits diffuse Luftausströmerdüsen. Bei einer derartigen Herangehensweise ist jedoch der dafür erforderliche Bauraum problematisch.

Die FR 2 881 084 A1 offenbart ebenfalls eine Luftausströmvorrichtung zum Ausströmen eines Luftstroms, insbesondere in einen Fahrzeuginnenraum, mit mindestens einer verstellbaren Luftleiteinrichtung und mit mindestens einer verstellbaren Luftabsperreinrichtung, mit einem Bedienelement, mit dem sowohl die zumindest eine Luftleiteinrichtung, als auch die zumindest eine Luftabsperreinrichtung verstellt werden kann.

Weiterhin wurde beispielsweise in der deutschen Patentanmeldung DE 10 2007 013 868 A1 ein Luftausströmer vorgeschlagen, welcher sowohl eine gerichtete Strömung, als auch eine diffuse Luftströmung (Drallströmung) abgeben kann. Die Umstellung zwischen gerichteter Luftausströmung (Spot-Betrieb) und diffuser Luftabgabe erfolgt durch Verstellung eines Bedienelements. Um den Luftdurchsatz durch die in DE 10 2007 013 868 A1 beschriebene Luftausströmerdüse zu verändern, ist es erforderlich ein zusätzliches Bedienelement vorzusehen, mit dem der Luftdurchsatz durch die Luftausströmerdüse verändert werden kann. Auch dies erfordert einen gewissen Bauraum. Darüber hinaus ist die Bedienung zweier unterschiedlicher Bedienelemente wenig komfortabel und in nur geringem Maße intuitiv.

Die Aufgabe der Erfindung besteht darin eine gegenüber dem Stand der Technik verbesserte Luftausströmvorrichtung zur Verfügung zu stellen. Dazu wird gemäß Anspruch 1 vorgeschlagen, eine Luftausströmvorrichtung zum Ausströmen eines Luftstroms mit mindestens einer verstellbaren Luftleiteinrichtung und mindestens einer verstellbaren Luftabsperreinrichtung mit einem Bedienelement zu versehen, mit dem sowohl die zumindest eine Luftleiteinrichtung, als auch die zumindest eine Luftabsperreinrichtung verstellt werden kann. Insbesondere kann die Luftausströmvorrichtung zum Ausströmen eines Luftstroms in einen Fahrzeuginnenraum dienen. Mit der vorgeschlagenen Bauform ist es möglich, die Anzahl der zur Einstellung der Luftausströmvorrichtung erforderlichen Bedienelemente zu verringern. Dadurch kann nicht nur Bauraum eingespart werden, sondern es kann gegebenenfalls auch ein kostengünstigerer Aufbau realisiert werden. Weiterhin ist es möglich, dass Umlenkelemente, wie Hebel, Seilzüge, oder dergleichen eingespart werden können, wodurch die Kosten weiter gesenkt werden können und gegebenenfalls die Zuverlässigkeit der Luftausströmvorrichtung weiter erhöht werden kann. Die Bedienung der Luftausströmvorrichtung mit einer reduzierten Anzahl von Bedienelementen kann sich jedoch auch als besenders komfortabel für die Benutzer der Vorrichtung (beispielsweise den Fahrer und/oder den Beifahrer eines Kraftfahrzeugs) erweisen. Auch ist es möglich, dass die intuitive Bedienbarkeit der Luftausströmvorrichtung erhöht wird. Dadurch, dass eine reduzierte Anzahl von Bedienelementen vorhanden sein kann (gegebenenfalls auch nur ein einzelnes Bedienelement), kann die Aufmerksamkeit, die zur Bedienung der Luftausströmvorrichtung erforderlich ist, verringert werden, was insbesondere für den Fahrer eines Kraftfahrzeugs von Vorteil ist. Dadurch können gegebenenfalls kritische Situationen und/oder Unfälle vermieden werden. Schließlich kann durch die reduzierte Anzahl an Bedienelementen auch die Optik des Kraftfahrzeuginnenraums verbessert werden, Möglich ist es insbesondere, für jede (bzw. für einen Teil) der bei einem Kraftfahrzeug vorzusehenden Luftausströmvorrichtungen jeweils eines der vorgeschlagenen "kombinierten" Bedienelemente vorzusehen. Es ist jedoch auch möglich, dass mit einem einzelnen Bedienelement auch mehrere Luftausströmvorrichtungen angesteuert werden können. Hierzu können beliebige, im Stand der Technik an sich bekannte Kraftübertragungselemente (beispielsweise Hebel, Drehstangen, Seilzüge und dergleichen) verwendet werden.

Erfindungsgemäß ist. die Luftausströmvorrichtung derart gestaltet, dass sowohl die zumindest eine Luftleiteinrichtung, als auch die zumindest eine Luftabsperreinrichtung zumindest teilweise und/oder zumindest bereichsweise durch eine gleichartige Verstellbewegung des Bedienelements verstellt werden. Beispielsweise kann eine Verstellung von Luftleiteinrichtung und/oder Luftabsperreinrichtung durch eine Drehbewegung des Bedienelements erfolgen. Eine derartige Drehbewegung kann sich als besonders vorteilhaft und feinfühlig erweisen. Insbesondere kann die Drehbewegung derart ausgestaltet werden, dass eine oder mehrere Vollumdrehungen zur Verstellung einer bzw. mehrerer verstellbarer Einrichtungen vonnöten sind. Dadurch kann insbesondere eine feinfühlige Einstellung gefördert werden und/oder die zur Verstellung der verstellbaren Einrichtungen erforderlichen Bedienkräfte verringert werden. Umgekehrt kann es sich natürlich auch als vorteilhaft erweisen, wenn bereits eine relativ geringe Verstellbewegung des Bedienelements (wie beispielsweise eine Verdrehung eines Drehknopfs) eine relativ große Verstellung von Luftleiteinrichtung und/oder Luftabsperreinrichtung bewirken. Dadurch ist es möglich, dass die entsprechende Luftausströmvorrichtung besonders rasch verstellt werden kann. Selbstverständlich ist es möglich, dass anstelle von Drehbewegungen auch andere Arten von Verstellbewegungen zum Verstellen der Luftabsperreinrichtung beziehungsweise der Luftleiteinrichtung genutzt werden. Insbesondere ist in diesem Zusammenhang an eine Verschiebebewegung des Bedienelements (insbesondere an eine lineare Verschiebebewegung) zu denken. Um dabei den Verstellweg nicht zu groß werden zu lassen, erweist sich üblicherweise insbesondere in diesem Zusammenhang eine relativ geringe Verstellbewegung des Bedienelements als vorteilhaft. Ansonsten könnte sich das Bedienelement beispielsweise unerwünscht weit in den Fahrzeuginnenraum hinein erstrecken, sofern es sich bei der Verschiebebewegung um ein Ziehen beziehungsweise Drücken handelt. Insbesondere dann, wenn es sich um eine seitliche Verschiebebewegung handelt, kann jedoch auch ein längerer Verstellweg sinnvoll sein.

Erfindungsgemäß erfolgt die Verstellung der zumindest einen Luftleiteinrichtung sowie der zumindest einen Luftabsperreinrichtung nacheinander, insbesondere mehrfach nacheinander. Mit einer derartigen Bauform können die einzelnen, über das Bedienelement gesteuerten verstellbaren Einrichtungen (Luftleiteinrichtung/Luftabsperreinrichtung) jeweils gezielt und weitestgehend unabhängig voneinander verstellt werden. Dadurch ist eine besonders hohe Einstellgenauigkeit erzielbar. Ein mehrfach nacheinander erfolgender Wechsel der verstellbaren Einrichtungen kann beispielsweise derart umgesetzt werden, dass beispielsweise bei einem Verdrehen des Bedienelements zunächst die Luftabsperreinrichtung verstellt wird, anschließend die Luftleiteinrichtung und im Anschluss daran erneut die Luftabsperreinrichtung (selbstverständlich ist es auch möglich, dass zunächst die Luftleiteinrichtung, dann die Luftabsperreinrichtung und dann erneut die Luftleiteinrichtung verstellt wird; weiterhin können die "Verstellabfolgen" noch weiter verlängert werden, sodass ein viermaliger, fünfmaliger, oder noch häufigerer Wechsel erfolgt).

Erfindungsgemäß ist die Luftausströmvorrichtung derart ausgebildet, dass die Reihenfolge der Verstellung der Luftleiteinrichtung sowie der Verstellung der Luftabsperreinrichtung bei einer Betätigung des Bedienelements unabhängig von der Verstellbewegung des Bedienelements zumindest bereichsweise im Wesentlichen die gleiche ist. Wenn man also beispielsweise eine Luftausströmvorrichtung hat, deren Bedienelement sich im linken Endanschlag befindet (in Beispielsfall eines drehbaren Bedienelements), wobei ein gerichteter Luftstrahl (Spot-Betrieb) mit vollem Luftdurchsatz eingestellt ist, so wird beispielsweise bei einem Verdrehen des Bedienelements nach rechts zunächst die Luftausströmcharakteristik von "Spot" nach "diffuse" oder "drallförmige" Luftströmung verstellt, wobei die Luftausströmung nach wie vor maximal bleibt. Dreht man das Bedienelement weiter, so fängt die Luftausströmvorrichung - nachdem diese die voll-diffuse Luftausströmcharakteristik erreicht hat - an, sich zu schließen (durch Veränderung der Luftabsperreinrichtung). Im äußersten rechten Endanschlag befindet sich nun die Luftausströmvorrichtung im geschlossenen Zustand mit diffuser Luftausströmcharakteristik. Ändert man nun die Betätigungsrichtung des Bedienelements und dreht dieses zurück nach links, so verbleibt die Luftausströmvorrichtung anfänglich im geschlossenen Zustand, verändert jedoch die Luftausströmcharakteristik von "diffus" oder "drallförmig" nach "Spot". Sobald die Luftausströmvorrichtung voll auf "Spot"-Betrieb befindlich ist, fängt nunmehr die Luftabsperreinrichtung an, die Luftdurchgangsöffnung zu öffnen. Schlussendlich ist erneut der Anfangspunkt erreicht. Es wird nochmals darauf hingewiesen, dass die genannte Bedienabfolge rein beispielhaft gewählt ist. Ebenso ist auch die Art der Verstellbewegung (vorliegend ein Drehen) rein beispielhaft gewählt. Zusätzlich oder alternativ zur Drehbewegung sind auch anderweitige Arten von Verstellbewegungen, wie beispielsweise ein Verschieben, ein Ziehen und/oder ein Drücken denkbar. Durch die vorgeschlagene Bauform ist es jedenfalls möglich, dass ein besonders großer Bereich an unterschiedlichen Einstellungen erreicht werden kann. Insbesondere können auch Zwischenwerte des "Regelungsrechtecks" erreicht werden, wenn das Bedienelement nicht bis zum entsprechenden Endausschlag bedient wird, sondern bereits vorher in die Gegenrichtung betätigt wird.

Zusätzlich oder alternativ kann es sich jedoch auch als vorteilhaft erweisen, wenn die Luftausströmvorrichtung derart ausgebildet ist, dass sich die Reihenfolge der Verstellung der Luftleiteinrichtung sowie der Verstellung der Luftabsperreinrichtung bei einer Betätigung des Bedienelements zumindest bereichsweise in Abhängigkeit von der Verstellbewegung des Bedienelements ändert. Als ein Beispiel für eine mögliche Abfolge kann es sich um eine Luftausströmvorrichtung handeln, die sich im linken Endanschlag befindet, und in dieser Position auf Spot-Betrieb und "geschlossene Düse" eingestellt ist. Fängt man an, das Bedienelement nach rechts zu bewegen, so öffnet man zunächst den Luftdurchsatz im "Spor-Betrieb. Bei vollem Luftdurchsatz ändert sich anschließend die Luftausströmcharakteristik von "Spot" nach "diffus", Ist die voll-diffuse Luftausströmcharakteristik erreicht, so wird anschließen der Luftdurchtritt vom vollen Durchsatz auf null-Durchsatz verringert. Kehrt man anschließend die Bewegungsnchtung des Bedienelements um, so steigt zunächst der Luftdurchsatz bei nach wie vor voll-diffuser Luftausströmcharakteristik von Null auf den Maximalwert an. Anschließend ändert sich die Luftausströmcharakteristik von "diffus" zurück auf "spot". Ist die "Spot"-Luftausströmcharakteristik erreicht, so wird anschließend der Luftdurchsatz durch die Luftausströmvorrichtung verringert. Auch hier wird nochmals darauf hingewiesen, dass es sich lediglich um eine beispielhafte Funktionsabfolge handelt. Darüber hinaus ist auch die Art der Verstellbewegung (vorliegend ein Drehen) rein beispielhaft gewählt. Zusätzlich oder alternativ zur Drehbewegung sind auch anderweitige Arten von Verstellbewegungen, wie beispielsweise ein Verschieben, ein Ziehen und/oder ein Drücken denkbar. Mit der vorgeschlagenen Bauausführung ist es jedoch möglich, dass der Bediener bei einer Bedienung des Bedienelements stets der gleichen Regelkurve folgt, was für ihn besonders einsichtig und intuitiv sein kann. Darüber hinaus kann es besonders einfach sein, eine zu starke Verstellbewegung des Bedienelements durch ein einfaches Rückführen des Bedienelements zu korrigieren (z. Bsp. ein leichtes Zurückdrehen, wenn man etwas zu weit gedreht hat). Auch dies kann vorteilhaft sein.

Eine weitere zusätzliche und/oder alternative Ausbildungsweise der Luftausströmvorrichtung kann sich ergeben, wenn diese derart ausgebildet ist, dass die zumindest eine Luftleiteinrichtung und die zumindest eine Luftabsperreinrichtung zumindest teilweise und/oder zumindest bereichsweise durch verschiedenartige Verstellbewegungen des Bedienelements verstellt werden. Beispielsweise ist es denkbar, dass die Luftleiteinrichtung durch ein Verdrehen des Bedienelements verstellt wird, wohingegen eine Verstellung der Luftabsperreinrichtung beispielsweise durch eine axiale Bewegung des Bedienelements (Herausziehen bzw. Hineinschieben) realisiert wird. Mit einer derartigen Verstellcharakteristik können insbesondere unterschiedlichste Einstellung beider verstellbarer Einrichtungen auch unabhängig voneinander besonders schnell erreicht werden. Die entsprechend genau anpassbare Luftausströmcharakteristik kann dementsprechend den Komfort der sich im Innenraum aufhaltenden Personen (beispielsweise der Kraftfahrzeuginsassen) erhöhen.

Als besonders vorteilhaft kann es sich erweisen, wenn bei der Luftausströmvorrichtung zwischen dem Bedienelement und der Luftleiteinrichtung einerseits bzw. dem Bedienelement und der Luftabsperreinrichtung andererseits unter Vermittlung einer zumindest teilweise beweglichen, vorzugsweise zumindest teilweise axial und/oder radial und/oder angular beweglichen Koppeleinrichtung eine mechanische Wirkverbindung hergestellt und/oder gelöst werden kann. Mit einer derartigen Bauausführung können die bereits vorab vorgeschlagenen und näher beschriebenen Einstellcharakteristiken technisch besonders einfach realisiert werden. Insbesondere ist es durch eine wechselweise Wirkverbindung zwischen Bedienelement und Luftleiteinrichtung bzw. Bedienelement und Luftabsperreinrichtung möglich, dass die verstellbaren Einrichtungen der Luftausströmvorrichtung unabhängig voneinander verstellt werden können.

Eine besonders geeignete Ausführungsform für eine derartige Koppeleinrichgung besteht the einer Bauausführung nach Art einer Vorsprung-Nut-Paarung und/oder in einer Bauausführung unter Verwendung zumindest einer abschnittsweise ausgebildeten Zahnstangeneinrichtung und/oder in einer Bauausführung nach Art einer Taschen-Sicherungsrippen-Paarung. Bei dem Vorsprung kann es sich beispielsweise um eine Art Stift, hügelartigen Vorsprung, beweglich angeordnetem Schlittenelement und dergleichen handeln. Bei einer Nut kann es sich in beliebiger Weise um eine Führungsnut, einen Schlitz, eine Kulissenführung und dergleichen handeln. Bei der vorgeschlar genen Zahnstangeneinrichtung kann es sich nicht nur um geradlinig ausgebildete Zahnstangeneinrichtungen handeln, sondern insbesondere auch um Zahnstangeneinrichtungen, welche einer gebogenen Linie (insbesondere einem Kreisbogen) folgen. Eine Kopplung bzw. eine Entkopplung kann dabei dadurch erfolgen, dass Zahnstangenelemente in Eingriff miteinander kommen bzw. außer Eingriff miteinander treten. Insbesondere ist es auch möglich, dass abschnittsweise ausgebildete Zahnstangeneinrichtungen (beispielsweise eine längs eines Kreisbogensegments angeordnete Zahnstangeneinrichtung) und zumindest im Wesentlichen in sich geschlossene Zahnstangeneinrichtungen (beispielsweise ein klassisches Zahnrad mit Innenverzahnung und/oder Außenverzahnung) miteinander kombiniert werden. Bei einer Taschen-Sicherungsrippen-Paarung kann es sich insbesondere um eine Art Aufnahmetasche handeln, in die hinein eine Art vorspringender Stift, eine Art Mitnehmer und dergleichen ausweichen kann (beispielsweise aus der "normalen" Bewegungsbahn einer Kurvenbahn heraus), wobei er in dieser Position durch eine Sicherungsrippe fixiert werden kann.

Weiterhin hat es sich in ersten Experimenten als besonders vorteilhaft erwiesen, wenn zumindest Teile der Luftausströmvorrichtung, insbesondere zumindest ein Koppelelement, kraftbeaufschlagt sind. Eine derartige Kraftbeaufschlagung kann insbesondere unter Verwendung eines mechanischen Kraftspeichers erfolgen. Bei einem derartigen mechanischen Kraftspeicher kann es sich beispielsweise um eine Spiralfeder, eine Blattfeder, ein elastisch verformbares Material und dergleichen handeln. Durch die Kraftbeaufschlagung ist es möglich, dass das entsprechend kraftbeaufschlagte Bauteil in eine dezidierte Ruhestellung zurück kehren kann. Ein Herausbewegen des betreffenden Bauteils aus der entsprechenden Ruhestellung kann anschließend durch eine extern von außen einwirkende Kraft erfolgen. Handelt es sich bei dem Bauteil um das Koppelelement, so kann mit der entsprechenden Stellung des Koppelelements eine entsprechende mechanische Koppelung zwischen Bedienelement und Luftleiteinrichtung einerseits und Bedienelement und Luftabsperreinrichtung andererseits erfolgen. Dadurch ist es insbesondere möglich, die bereits vorab beschriebenen Bedienungscharakteristiken zu realisieren.

Vorteilhaft ist es insbesondere, wenn zumindest eine der Verstellbewegung aus der Gruppe von Verstellbewegungen entnommen ist, die angulare Verstellbewegungen, axiale Verstellbewegungen, radiale Verstellbewegungen und translatorische Verstellbewegungen umfasst. Bei den Verstellbewegungen kann es sich insbesondere um die Verstellbewegungen des Bedienelements, der Luftieiteinrichtung und/oder der Luftabsperreinrichtung handeln. Die genannten Arten von Verstellbewegungen haben sich bei den bislang durchgeführten Versuchen als besonders vorteilhaft erwiesen.

Eine vorteilhafte Bauausführung kann sich dann ergeben, wenn die Luftausströmvorrichtung zumindest eine Verstellwegübertragungseinrichtung aufweist, welche insbesondere derart ausgebildet und eingerichtet ist, dass die Art der Verstellbewegung zumindest teilweise und/oder zumindest bereichsweise geändert wird. Dadurch ist es möglich, die Luftausströmvorrichtung deutlich flexibler aufbauen zu können. Insbesondrere ist es möglich, dass das Bedienelement hinsichtlich der Art der an ihm zu durchführenden Verstellbewegung für eine möglichst optimale Bedlenbarkeit der Luftausströmvorrichtung hin optimiert werden kann. Weiterhin ist es möglich, dass die Art der Verstellbewegung, mit der das Luftbeeinflussungselement, und/oder die Luftabsperreinrichtung bewegt werden, auf die jeweillge Aufgabe der betreffenden Einrichtung hin optimiert werden kann. Unter einer "Art einer Verstellbewegung" ist insbesondere eine Verschiebebewegung (speziell lineare Verschiebebewegung), ein Drücken, ein Ziehen, eine Kippbewegung, eine Drehbewegung sowie Kombinationen aus zwei oder mehreren der genannten Bewegungen zu verstehen. Beispielsweise ist es möglich, dass eine Verschiebebewegung (beispielsweise ein Ziehen und/oder ein Drücken) des Bedienelements in eine Drehbewegung der Luftleiteinrichtung sowie eine Verschiebebewegung der Luftabsperreinrichtung umgesetzt wird. Als Verstellwegübertregungseinrichtungen können insbesondere sämtliche an sich im Stand der Technik bekannte Kraftübertragungseinrichtungen, wie insbesondere Kurvenbahnen, Kurvenscheibengetriebe, Hebelanordnungen und dergleichen verwendet werden.

Weiterhin ist es von Vorteil, wenn die Luftausströmvorrichtung derart ausgebildet ist, dass bei dieser zumindest eine Sperreinrichtung und/oder zumindest eine Einrasteinrichtung vorgesehen ist. Bei einer Einrasteinrichtung kann es sich insbesondere um eine Einrichtung handeln, mit der das Bedienelement und/oder die unter Verwendung des Bedienelements angesteuerten Elemente in bestimmten (insbesondere in einer Mehrzahl von bestimmten) Stellungen einrasten können, Insbesondere kann ein derartiges Einrasten für bestimmte, besonders ausgezeichnete Stellungen der Luftausströmvorrichtung vorgesehen werden, Beispiele für derartige Stellungen sind eine Stellung "Gesamtluft", "Diffusmodus in 1/3-Stellung", Diffusmodus in 2/3-Stellung", "Diffusmodus gesamt" und/oder "Luftabsperrund". Das Einrasten sollte vorzugsweise derart erfolgen, dass der Bediener des Bedienelements eine spürbare Rückrneldung erhält (spürbares Einrasten), wobei die auftretenden Kräfte sinnvollerweise derart gewählt werden, dass ein Weiterbewegen des Bedienelements auch ohne größere Kraftanstrengung möglich ist und/oder ohne dass sich andere Elemente aufgrund der erforderlichen Kraftbeaufschlagung mehr oder weniger zwangsweise verstellen. Unter einer Sperreinrichtung kann insbesondere verstanden werden, dass die nicht-beabsichtige Verstellung eines Bauteils durch mechanische Vorrichtungen im Wesentlichen zwangsweise unterbunden wird, wenn sich das Bedienelement in bestimmten Stellungen befindet. So ist es beispielsweise denkbar, dass eine Veränderung der Stellung der Luftabsperreinrichtung (beispielsweise durch eine sich verändernde Luftströmungsgeschwindigkeit) verhindert wird, wenn sich das Bedienelement in der Stellung "Gesamtluft", "Diffusmodus gesamt" und/oder einer Zwischenstellung zwischen diesen beiden Positionen befindet.

Eine besonders vorteilhafte Bauausführung der Luftausströmvorrichtung kann sich ergeben, wenn bei dieser die Luftabsperreinrichtung derart ausgebildet und eingerichtet ist, dass die Luftabsperrung zumindest teilweise und/oder zumindest bereichsweise durch ein Zusammenwirken von zumindest Teilen der Luftabsperreinrichtung mit zumindest Teilen der Luftleiteinrichtung bewirkt wird. Beispielsweise ist es möglich, dass eine Art Verschlussdeckel (der insbesondere einen Teil der Luftabsperreinrichtung beziehungsweise die Luftabsperreinrichtung darstellen kann) zumindest in bestimmten Betriebsstellungen der Luftausströmvorrichtung mit Teilen der Luftleiteinrichtung eine im Wesentlichen geschlossene Oberfläche ausbilden kann. Dabei kann sich die Möglichkeit, dass eine derartige, im Wesentlichen geschlossene Oberfläche ausgebildet werden kann, auf bestimmte Konfigurationen der Luftabsperreinrichtung und/oder (insbesondere) der Luftleineinrichtung beschränkt sein. So weist beispielsweise bei üblichen Ausbildungsformen der Luftausströmvorrichtung die Luftleiteinrichtung in einer Betriebsstellung "Diffusmodus" üblicherweise kleinere Luftdurchtrittsöffnungen auf, als dies in einer Betriebsstellung "Gesamtluft" der Fall ist. Die gegebenenfalls ohnehin verkleinerten Luftausströmeröffnungen können dann jedoch relativ einfach und mit relativ kleinen deckelartigen Elementen oder dergleichen verschlossen werden. Besonders vorzugsweise sind Teile der Luftabsperreinrichtung flächig ausgebildet und/oder weisen zumindest bereichsweise eine Weichkomponente auf. Mit einer derartigen Weichkomponente kann im Kontakt mit einer (durchaus auch harten) Oberfläche eines Luftleitelements auf besonders einfache und effektive Weise ein Durchtritt von Luft verhindert werden. Zusätzlich oder alternativ können natürlich auch zumindest Teile zumindest eines Luftleitelements und/oder zumindest Teile anderweitiger Bauteile zumindest bereichsweise eine Weichkomponente aufweisen. Dadurch kann die Luftausströmvorrichtung besonders dicht verschlossen werden. Da die noch benötigten Bauteile der Luftabsperreinrichtung üblicherweise besonders klein ausgeführt werden können, ist es andererseits möglich, dass der Luftdurchtritt in einer geöffneten Stellung der Luftausströmvorrichtung besonders groß sein kann. Darüber hinaus ist es mit dem vorgeschlagenen Aufbau in der Regel möglich, Komponenten einsparen zu können und/oder die noch erforderlichen Komponenten kleiner ausführen zu können. Hierdurch können in der Regel Kosten gespart werden sowie Bauraum und/oder Gewicht eingespart werden.

Vorteilhaft ist es darüber hinaus, wenn zumindest eine Luftleiteinrichtung zumindest ein Luftleitelement in der Art eines Schaufelkranzes mit mindestens einer Schaufel aufweist, wobei jede der Schaufeln aus mindestens zwei axial hintereinander angeordneten Segmenten gebildet ist, welche relativ zueinander angular verstellbar sind. Mit einer derartigen Bauausführung ist eine verstellbare und regelbare Luftausströmcharakteristik des ausströmenden Luftstroms zwischen einem reinen "Spot"-Betrieb und einem reinen "Diffus-" oder "Drall"-Betrieb besonders einfach und effektiv realisierbar.

Besonders vorteilhaft kann es auch sein, wenn die Luftausströmvorrichtung derart ausgebildet ist, dass die Luftausströmungsrichtung der Luftausströmvorrichtung verstellbar ist. Auf diese Weise kann der aus der Luftausströmvorrichtung austretende Luftstrom nochmals in Abhängigkeit der jewelligen Personenwünsche (Fahrzeuginsassenwünsche) angepasst werden. Im Übrigen ist es auch möglich, dass die Luftausströmungsrichtung ebenfalls mit Hilfe des Bedienelements verstellt werden kann. Dadurch kann sich eine besonders platzsparende, aber dennoch besonders intuitive und schnelle Einstellbarkeit der Luftausströmungsvorrichtung (einschließlich der Luftausströmungsrichtung) ergeben,

Im Folgenden wird die Erfindung anhand vorteilhafter Ausführungsbeispiele und unter Bezugnahme auf die beigefügte Zeichnung näher erläutert. Es zeigt:
- Fig. 1:: ein erstes Ausführungsbeispiel einer Luftausströmerdüse in einer ersten perspektivischen, teilweisen Explosionsansicht;
- Fig. 2:: die in Fig. 1 gezeigte Luftausströmerdüse in einer schematischen Draufsicht von vorne;
- Fig. 3:: die in Fig. 1 und 2 dargestellte Luftausströmderdüse in einem schematischen Querschnitt längs einer ersten Querschnittsebene;
- Fig. 4:: die in Fig. 1 und 2 dargestellte Luftausströmerdüse in einem schematischen Querschnitt längs einer zweiten Querschnittsebene;

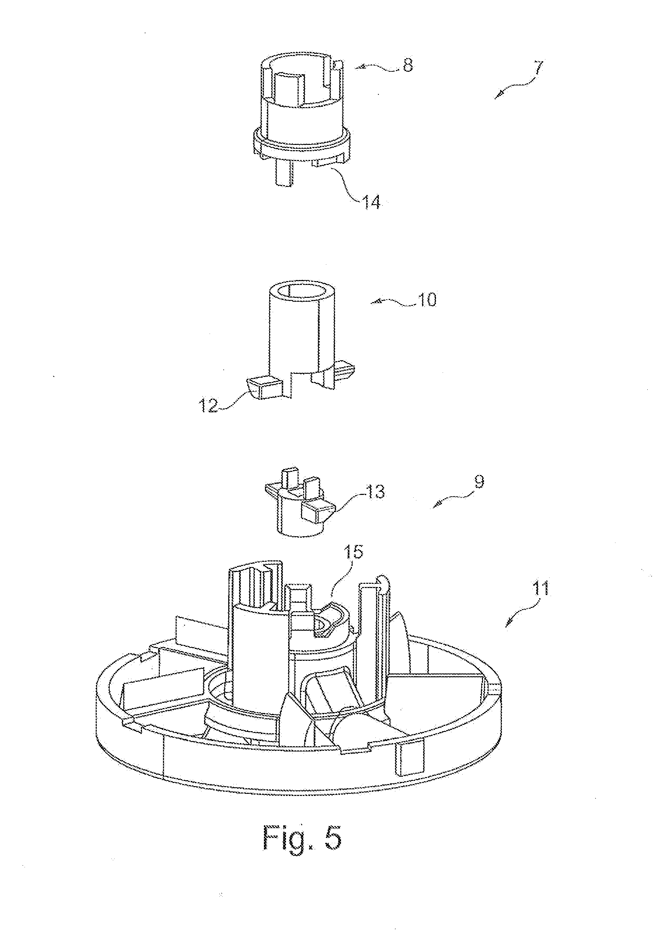

- Fig. 5:: die Verstellmechanik der in Fig. 1 und 2 gezeigten Luftausströmerdüse in einer schematischen Explosionsansicht;
- Fig. 6:: das Funktionsprinzip der in Fig. 5 gezeigten Verstellmechanik des ersten Ausführungsbeispiels einer Luftausströmerdüse;
- Fig. 7:: ein zweites Ausführungsbeispiel einer Luftausströmerdüse in einer schematischen, perspektivischen Ansicht;
- Fig. 8:: das zweite Ausführungsbeispiel einer Luftausströmerdüse in einer perspektivischen, teilweisen Explosionsansicht;
- Fig. 9:: eine schematische, perspektivische Darstellung eines ersten Rotationskörpers gemäß dem zweiten Ausführungsbeispiel einer Luftausströmerdüse;
- Fig. 10:: eine schematische, perspektivische Darstellung eines zweiten Rotationskörpers gemäß dem zweiten Ausführungsbeispiel einer Luftausströmerdüse;
- Fig. 11:: eine schematische, perspektivische Darstellung eines dritten Rotationskörpers gemäß dem zweiten Ausführungsbeispiel einer Luftausströmerdüse;
- Fig. 12:: eine schematische, perspektivische Darstellung eines vierten Rotationskörpers gemäß dem zweiten Ausführungsbeispiel einer Luftausströmerdüse;
- Fig. 13:: eine mögliche Ausführongsform einer Verschlussklappe;
- Fig. 14:: eine weitere mögliche Ausführungsform einer Verschlussklappe in einer schematischen, perspektivischen Ansicht;
- Fig. 15:: ein Verschlusselement der in Fig. 14 gezeigten Verschlussklappe in einer schematischen, perspektivischen Ansicht;
- Fig. 16:: ein erstes Bauteil einer Antriebseinheit der in Fig. 14 gezeigten Verschlussklappe in einer schematischen, perspektivischen Ansicht;
- Fig. 17:: ein zweites Bauteil einer Antriebseinheit der in Fig. 14 gezeigten Verschlussklappe in einer schematischen, perspektivischen Ansicht;
- Fig. 18:: ein drittes Bauteil einer Antriebseinheit der in Fig. 14 gezeigten Verschlussklappe in einer schematischen Draufsicht von unten;
- Fig. 19:: einen ersten Detailausschnitt eines dritten Ausführungsbeispiels einer Luftausströmerdüse in schematischer, perspektivischer Ansicht;
- Fig. 20:: ein erstes Bauteil für eine Luftausströmerdüse gemäß dem dritten Ausführungsbeispiel in schematischer, perspektivischer Ansicht;
- Fig. 21:: ein zweites Bauteil für eine Luftausströmerdüse gemäß dem dritten Ausführungsbeispiel in schematischer, perspektivischer Ansicht;
- Fig. 22:: ein drittes Bauteil für eine Luftausströmerdüse gemäß dem dritten Ausführungsbeispiel in vergrößerter, schematischer Teildraufsicht von unten;
- Fig. 23:: ein viertes Bauteil für eine Luftausströmerdüse gemäß dem dritten Ausführungsbeispiel in schematischer, perspektivischer Ansicht;
- Fig. 24:: ein fünftes Bauteil für eine Luftausströmerdüse gemäß dem dritten Ausführungsbeispiel in vergrößerter, schematischer Teildraufsicht von unten;
- Fig. 25:: einen schematischen Bedienungsablauf für eine Komfort-Luftausströmerdüse.
- Fig. 26:: ein viertes Ausführungsbeispiel einer Luftausströmerdüse in unterschiedlichen Betriebsstellungen, jeweils in schematischer, perspektivischer Ansicht;
- Fig. 27:: ein erstes Bauteil für eine Luftausströmerdüse gemäß dem vierten Ausführungsbeispiel in schematischer, perspektivischer Ansicht;
- Fig. 28:: das vierte Ausführungsbeispiel für eine Luftausströmerdüse in einer abweichenden, perspektivischen Ansicht von vorne;
- Fig. 29:: eine Bauteilgruppe für das vierte Ausführungsbeispiel einer Luftausströmerdüse in einer schematischen, perspektivischen Ansicht.

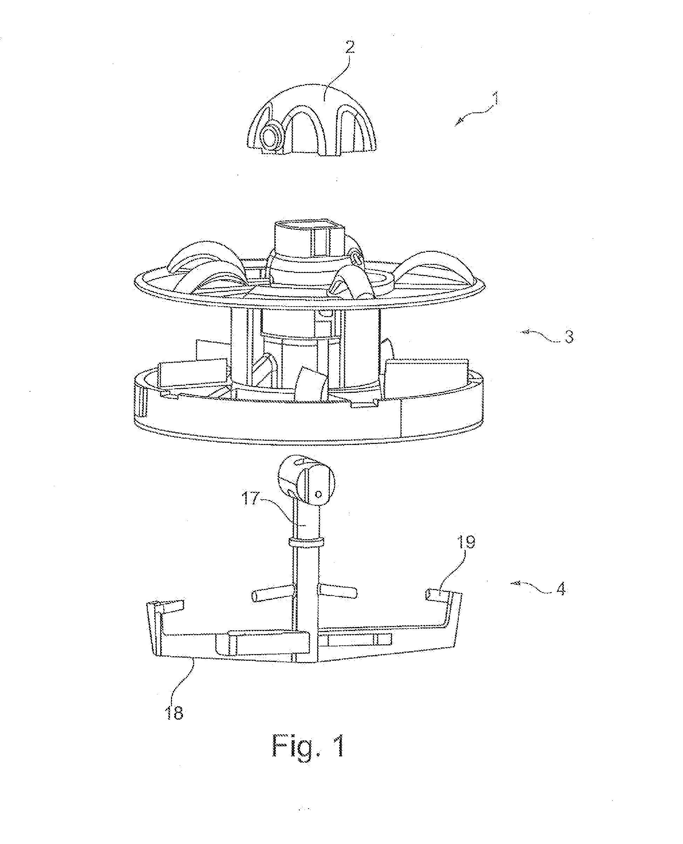

In Fig. 1 ist in einer ersten schematischen, perspektivischen Ansicht ein erstes mögliches Ausführungsbeispiel für eine Komfort-Luftausstromerdüse 1, die auf einfache Weise verstellt werden kann, dargestellt. Die Komfort-Luftausstrbmerdüse 1 besteht im Wesentlichen aus drei Teilbaugruppen, nämlich einem (einzelnen) Bedienknopf 2, einer Luftleiteinheit 3 sowie einer Verschlusseinheit 4 (welche In Fig. 1 nur teilweise dargestellt ist). Zur Verdeutlichung des Aufbaus der Komfort-Luftausströmerdüse 1 sind in Fig. 1 die einzelnen Baugruppen (Bedienknopf 2, Luftleiteinheit 3, Verschlusseinheit 4) relativ zueinander in einer explosionsartigen Ansicht dargestellt.

Von großer Bedeutung ist, dass die Komfort-Luftausströmerdüse 1 lediglich einen einzelnen Bedienknopf 2 aufweist, mit dem sowohl die Luftleiteinheit 3, als auch die Verschlusseinheit 4 verstellt werden kann. Dabei ist es nicht nur möglich, dass die Luftleiteinheit 3 und die Verschlusseinheit 4 durch eine Betätigung des Bedienknopfes 2 gleichzeitig ("parallel zueinander") verstellt werden können, sondern insbesondere auch zumindest bereichsweise unabhängig voneinander verstellt werden können (beispielsweise nacheinander; "seriell").

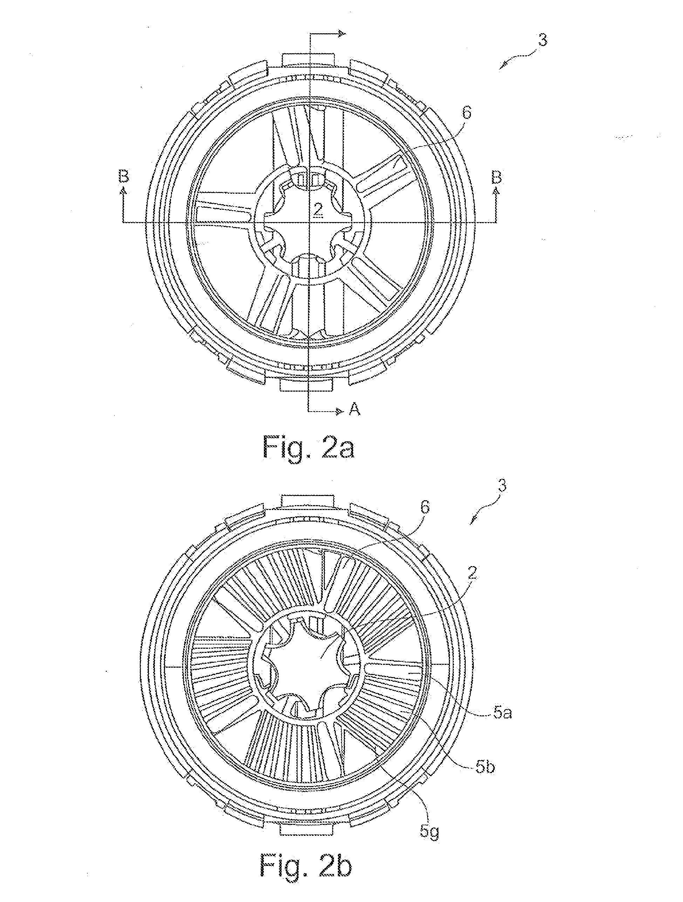

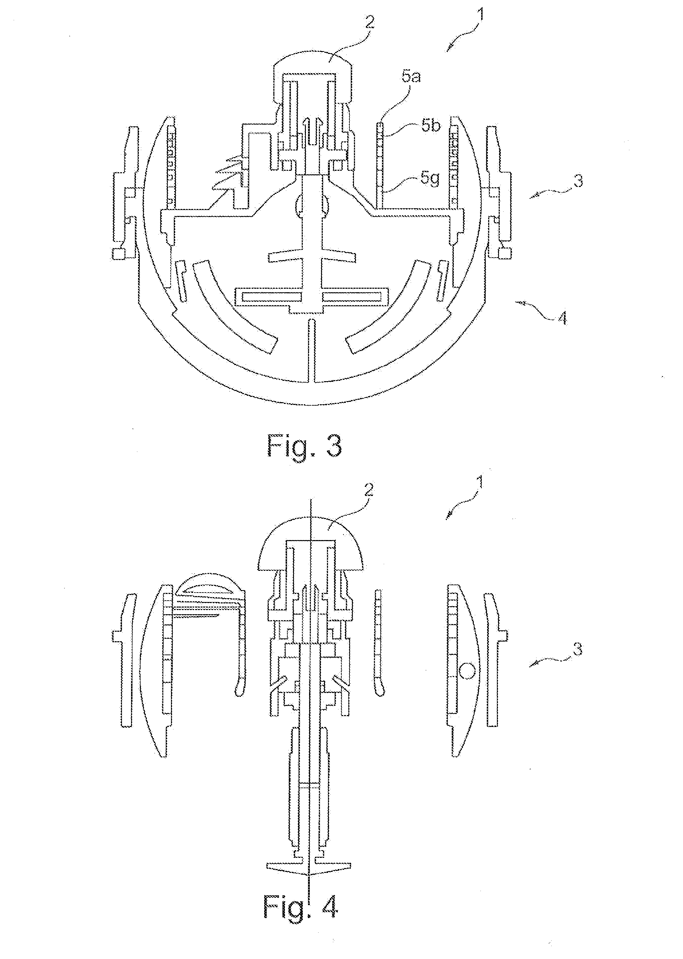

Die Funktionsweise der Luftleiteinheit 3 der Komfort-Luftausströmerdüse 1 ist insbesondere anhand von Fig. 2 (sowie darüber hinaus anhand von Fig. 3 und 4) zu erkennen.

Die Luftleiteinheit 3 weist eine Vielzahl von einzelnen Fächerscheiben 5a, 5b, ..., 5g auf, die in der Axialrichtung der Komfort-Luftausströmerdüse 1 hintereinander angeordnet sind. Jede der Fächerscheiben 5a, 5b, ..., 5g weist dabei eine Mehrzahl von Luftleitschaufeln 6 auf. In vorliegend dargestellten Ausführungsbeispiel der Komfort-Luftausströmerdüse 1 weist jede Fächerscheibe 5 vier luftleitelemente 6 auf, die entlang der Umfangsrichtung der jeweiligen Fächerscheibe 5 in äquidistanten Abständen angeordnet sind. Durch eine angulare Verstellung der Fächerscheiben 5 relativ zueinander, können diese in einer ersten Endposition im Wesentlichen fluchtend zueinander angeordnet sein. Diese Anordnung der Fächerscheiben 5 zueinander ist in Fig. 2a dargestellt. In dieser Stellung der Komfort-Luftausströmerdüse 1 tritt die durch die Komfort-Luftausströmerdüse 1 hindurch tretende Luftströmung als gerichteter Luftstrahl aus. Es handelt sich um den sogenannten "Spot"-Betrieb der Komfort-Luftausströmerdüse 1.

Werden die Fächerscheiben 5 dagegen angular zueinander versetzt angeordnet (siehe Fig. 2b) wird Je nach Versetzung der Facherscheiben 5 relativ zueinander ein unterschiedlich stark diffuser oder drallbehafteter Luftstrahl von der Komfort-Luftausströmerdüse 1 abgegeben.

Die Fig. 3 und 4 zeigen die Komfort-Luftausströmerdüse 1 entlang zweier unterschledlicher Querschnittsebenen in einer Stellung, in der die Luftleitschaufeln 6 der Fächerscheiben 5 fluchtend zueinander angeordnet sind (analog zu Fig. 2a). Fig. 3 entspricht dabei der in Fig. 2a dargestellten Querschnittsebene A-A, wohingegen Fig. 4 einem Schnitt entlang der in Fig. 2a dargestellten Querschnittsebene B-B entspricht.

Aufbau und Funktionsweise der Luftleiteinheit 3 entsprechen somit in etwa der in der deutschen Patentanmeldung DE 10 2007 013 868 A1 beschriebenen Vorrichtung.

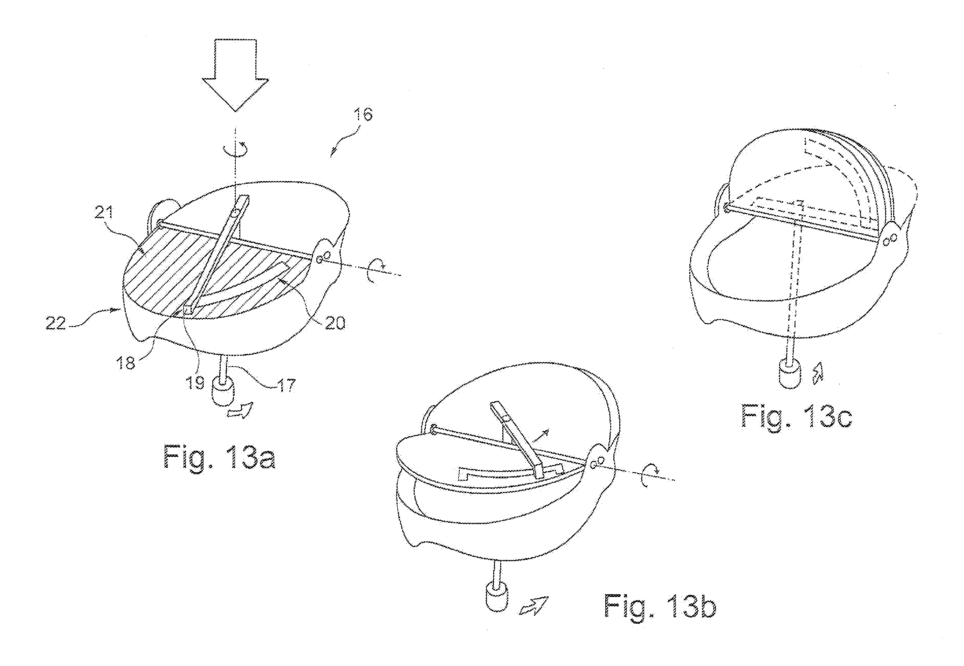

Die Verschlusseinheit 4 kann beispielsweise durch ein an sich bekanntes Klappenventil 16 realisiert werden, welches in den unterschiedlichenAbbildungen der Fig. 13 näher dargestellt ist. Die unterschiedlichen Abbildungen der Fig. 13 korrespondieren dabei mit unterschiedlichen Stellungen des Klappenventils 16, nämlich einer Verschlussstellung (Fig. 13a), einer halboffenen Stellung (Fig. 13b) sowie einer geöffneten Stellung (Fig. 13c). Das Klappventil 16 wird durch eine Drehbewegung eines zentral angeordneten Drehstifts 17 geöffnet, bzw. verschlossen. Der Drehstift 17 ist im vorliegend dargestellten Ausführungsbeispiel mit vorliegend zwei Drehhebeln 18 drehfest verbunden. Die Drehhebel 18 weisen jeweils hervorstehende Nasen 19 auf, welche jeweils in eine Führungsschiene 20 eingreifen, die in jeder der vorliegend zwei Klappenhälften 21 vorgesehen sind. Auf diese Weise wird eine Drehbewegung des Drehstifts 17 in eine Klappbewegung der Klappenhälften 21 umgesetzt, wodurch der Luftdurchtrittskanal 22 des Klappenventils 16 geöffnet bzw. geschlossen wird.

Die angulare Positionierung der Fächerscheiben 5 relativ zueinander erfolgt mit Hilfe des Bedienknopfes 2. Jedoch beschränkt sich die Funktionalität des Bedienknopfes 2 nicht nur auf die Verstellung der angularen Position der Fächerscheiben 5 zueinander (und damit auf eine Variation der Luftausströmcharakteristik zwischen "diffus" und "spot"). Vielmehr kann mit Hilfe des Bedienknopfes 2 zusätzlich auch die Stellung der Verschlusseinheit 4 der Komfort-Luftausströmerdüse 1 verstellt werden. Je nach Verstellung der Verschlusseinheit 4 kann die Komfort-Luftausströmerdüse 1 daher eine unterschiedlich starke Luftströmung freisetzen ("stark", "schwach" oder "aus"). Mit anderen Worten erfolgt die Verstellung der Komfort-Luftausströmerdüse 1 zwischen den Extremen "volle Luftströmung/Spot-Luftstrahl", "minimale Luftströmung/Spot-Luftströmung", "volle Luftströmung/diffuse Luftströmung" sowie "minimale Luftströmung/diffuse Luftströtung" durch die Betätigung eines einzelnen Bedienknopfes 2 (wobei selbstverständlich auch Zwischenstellung zwischen den genannten Extremen möglich sein können).

Im vorliegend dargestellten Ausführungsbeispiel der Komfort-Luftausströmerdüse 1 erfolgt die Verstellung von Luftleiteinheit 3 und Verschlusseinheit 4 bei einer durchgängigen Betätigung (vorliegend eine Drehbewegung) des Bedienknopfes 2 aufeinander abfolgend, mit anderen Worten in sequenzieller Abfolge. Bei einer Drehbewegung des Bedienknopfes 2 wird vorliegend also zunächst (ausschließlich) die Luftleiteinheit 3 verstellt, und anschließend (ausschließlich) die Verschlusseinheit 4. Um diese Verstelllogik zu realisieren kann beispielsweise eine Verstellmechanik 7 verwendet werden, wie sie in Fig, 5 dargestellt ist. Die Verstellmechanik 7 besteht im Wesentlichen aus einem Betätigungsring 8 (welcher beispielsweise drehfest mit dem Bedienknopf 2 verbunden sein kann), einem ersten Mitnehmer 9, einem zweiten Mitnehmer 10 sowie einem Fixring 11. Der erste Mitnehmer 9 sowie der zweite Mitnehmer 10 weisen jeweils hervorstehende Koppelstifte 12, 13 auf, welche in zusammengesetztem Zustand der Komfort-Luftausströmerdüse 1 in geeignet ausgeformten Aufnahmeräumen 14, 15, welche im Betätigungsring 8 sowie im Fixring 11 vorgesehen sind, aufgenommen werden.

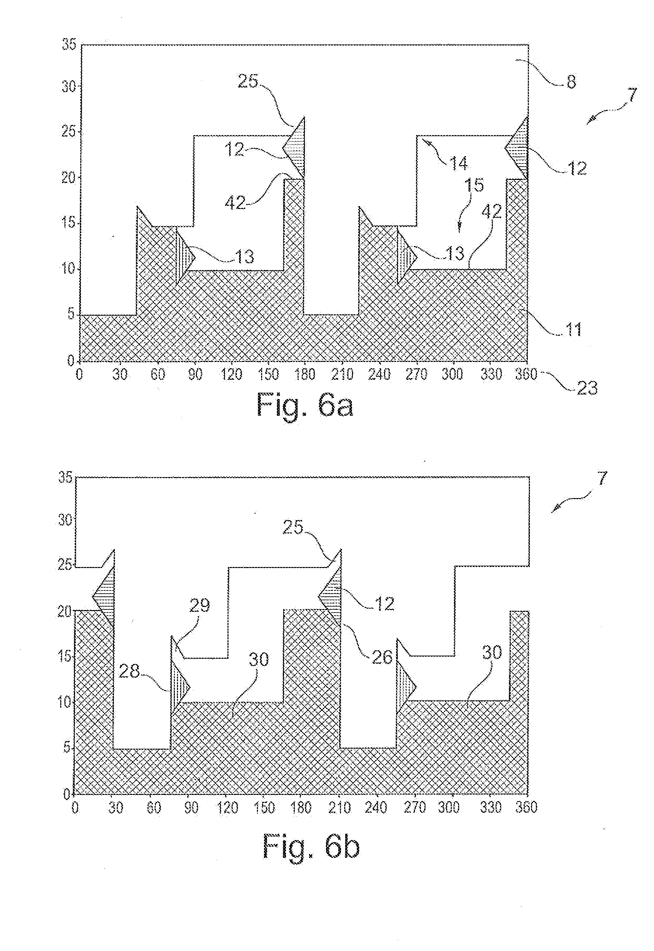

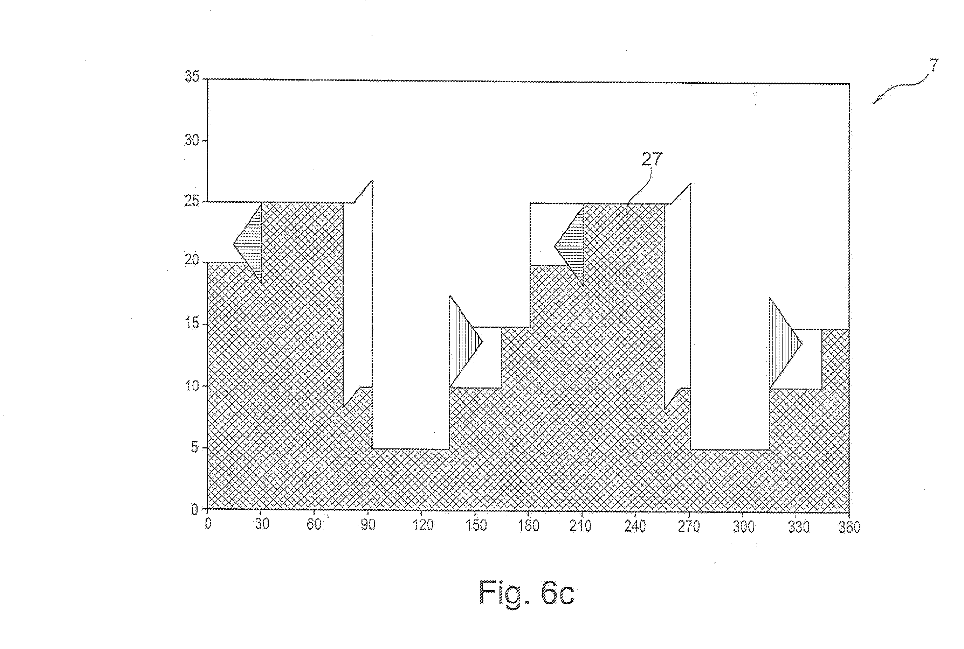

Insbesondere aus Fig. 6 wird das Funktionsprinzip der Verstellmechanik 7 ersichtlich. Dabei sind in Fig. 6 unterschiedliche relative Positionen von Betätigunsring 8, erstem Mitnehmer 9, zweitem Mitnehmer 10 und Fixring 11 zueinander dargestellt. In den Abbildungen der Fig. 6 sind dabei der Koppelbereich 14 des Betätigungsrings 8, der Koppelbereich 15 des Fixrings 11 sowie die Koppelstifte 13 des ersten Mitnehmers 9 bzw. die Koppelstifte 12 des zweiten Mitnehmers 10 dargestellt. Entlang der Abszisse 23 der jeweiligen Abbildung der Fig. 6 ist jeweils der Ort im Winkelgrad aufgetragen (insgesamt ist ein Vollkreis dargestellt), wohingegen längs der Ordinate 24 der Ort in der Axialrichtung dargestellt ist. Zu erwähnen ist noch, dass der Koppelbereich 14 des Betätigungsrings 8 "vor" dem Koppelbereich 15 des Fixrings 11 angeordnet ist. Mithin verdeckt der Koppelbereich 14 des Betätigungsrings 8 die dahinter liegenden Bereiche des Koppelbereichs 15 des Fixrings 11.

In Fig. 6a ist eine Situation dargestellt, bei der sich die Komfort-Luftausströmerdüse 1 in einer Anfangsstellung (beispielsweise in einem Spot-Modus der Luftleiteinheit 3 bei voll geöffneter Verschlusseinheit 4) befindet. Verdreht man nun den Bedienknopf 2 in Richtung der in Fig. 6b dargestellten Position der Verstellmechanik 7, so werden zunächst die Koppelstifte 12 des zweiten Mitnehmers 10 zwangsweise von den Aufnahmefurchen 25, welche im Betätigungsring 8 ausgebildet sind, mitgeführt. Ein "Auswelchen" der Koppelstifte 12 des zweiten Mitnehmers 10 in axialer Richtung nach unten und aus dem Bereich der Aufnahmenuten 25 des Betätigungsrings 8 heraus wird durch die Stirnflächen 42 des Koppelbereichs 15 des Fixrings 11 (zunächst) verhindert. Auf diese Weise wird eine drehfeste Koppelung von Betätigungsring 8 und zweiten Mitnehmer 10 realisiert.

Sobald Jedoch in Fig. 6b dargestellte Position erreicht ist, können die Koppelstifte 12 des zweiten Mitnehmers 10 aus den Aufnahmenuten 25 des Betätigungsrings 8 nach unten in entsprechend ausgebildete Aufnahmenuten 26 des Fixrings 11 ausweichen. Genauer gesagt wird das "Ausweichen" durch einen entsprechenden Anschlagbereich 27, der im Koppelbereich 15 des Fixrings 11 vorgesehen ist (vergleiche Fig. 6c) erzwungen. Dadurch wird die drehfeste Verbindung zwischen Betätigungsring 8 und zweitem Mitnehmer 10 gelöst.

Gleichzeitig werden die Koppelstifte 13 des ersten Mitnehmers 9 der Verstellmechanik 7 durch einen mechanischen Kontakt mit einem Anschlagbereich 28 des Koppelbereichs 14 des Betätigungsrings 8 aus den Aufnahmenuten 30, welche im Koppelbereich 15 des Fixrings 11 vorgesehen sind, in Aufnahmenuten 29 verschoben, die im Koppelbereich 14 des Betätigungsrings 8 vorgesehen sind. Durch diese Verschiebung der Koppelstifte 13 wird eine drehfeste Verbindung zwischen Betätigungsring 8 und erstem Mitnehmer 9 ausgebildet.

In Fig. 6c ist schließlich die Endstellung der Verstellmechanik 7 bei einer Betätigung des Bedienknopfs 2 erreicht.

Bei einer Rückwärtsbewegung der Verstellmechanik 1 erfolgt eine Verschiebung der Koppelstifte 12, 13 des ersten Mitnehmers 9 bzw. des zweiten Mitnehmers 10 in entsprechend umgekehrter Reihenfolge.

Wenn der zweite Mitnehmer 10 mit der Luftleiteinheit 3 gekoppelt ist, und der erste Mitnehmer 9 mit der Verschlusseinheit 4 gekoppelt ist, so entspricht die in Fig. 6a dargestellte Stellung einem Spot-Modus bei vollem Luftdurchsatz der Komfort-Luftausströmerdüse 1. In Fig. 6b ist bei der Komfort-Luftausströmerdüse 1 dagegen ein Diffus-Modus mit vollem Luftdurchsatz eingestellt. In Fig. 6c dagegen befindet sich die Komfort-Luftausströmerdüse 1 in einem Diffus-Modus mit vollständig geschlossener Luftströmung.

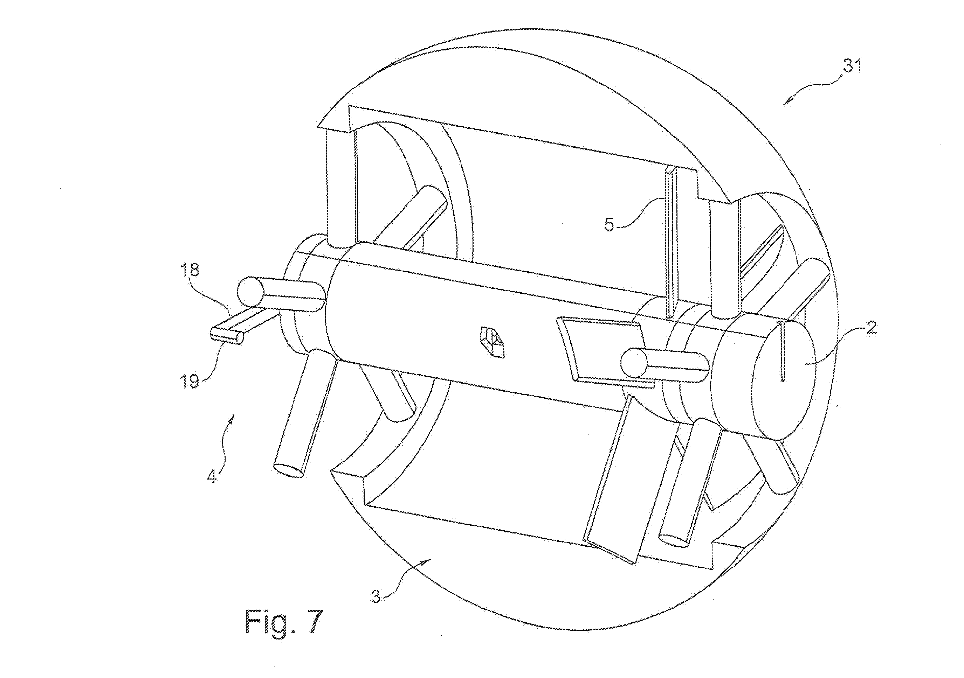

In Fig. 7 ist ein zweites Ausführungsbeispiel einer Komfort-Luftausströmerdüse 31 in schematischer, perspektivischer Ansicht dargestellt. Auch die vorliegende Komfort-Luftausströmerdüse 31 weist einen Bedienknopf 2, eine Luftleiteinheit 3 sowie eine Verschlusseinheit 4 auf. Sowohl die Luftleiteinheit 3, als auch die Verschlusseinheit 4 können in ähnlicher Weise wie beim ersten Ausführungsbeispiel einer Komfort-Luftausströmerdüse 1 realisiert werden. Aus Übersichtlichkeitsgründen ist in Fig. 7 lediglich eine einzelne Fächerscheibe 5 eingezeichnet. Darüber hinaus ist die Verschfusseinheit 4 lediglich teilweise dargestellt.

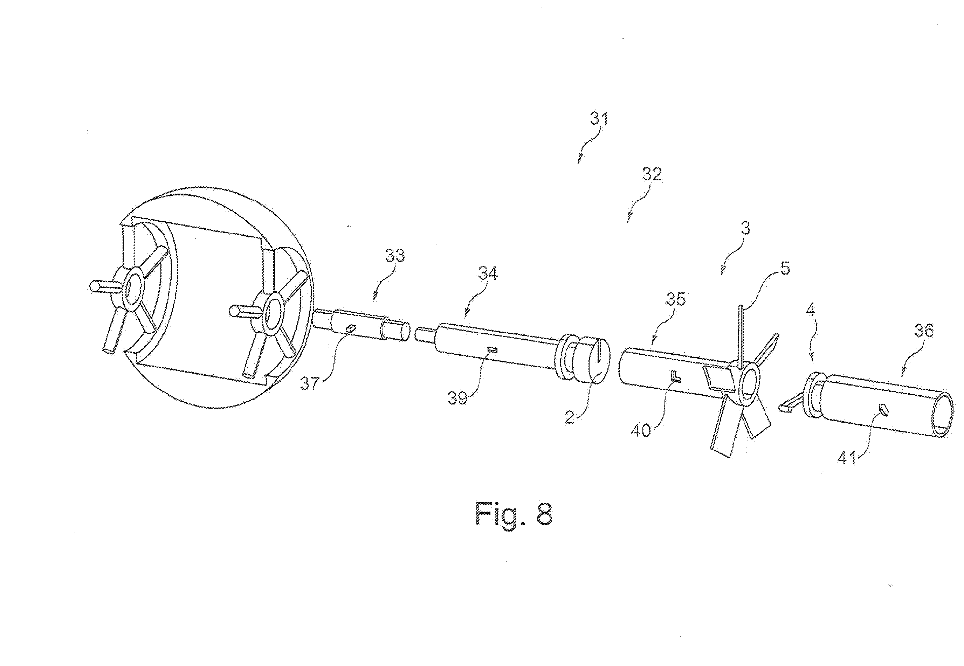

Fig. 8 zeigt zur Verdeutlichung des inneren Aufbaus der Komfort-Luftausströmerdüse 31 die Komfort-Luftausströmerdüse 31 in einer Explosionsansicht.

Bei dem zweiten Ausführungsbeispiel der Luftausströmerdüse 31 weist die Verstellmechanik 32 im Wesentlichen vier ineinander gesteckte Rotationskörper 33, 34, 35, 36 auf (nämlich einen ersten Rotationskörper 33, einen zweiten Rotationskörper 34, einen dritten Rotationskörper 35 sowie einen vierten Rotationskörper 36).

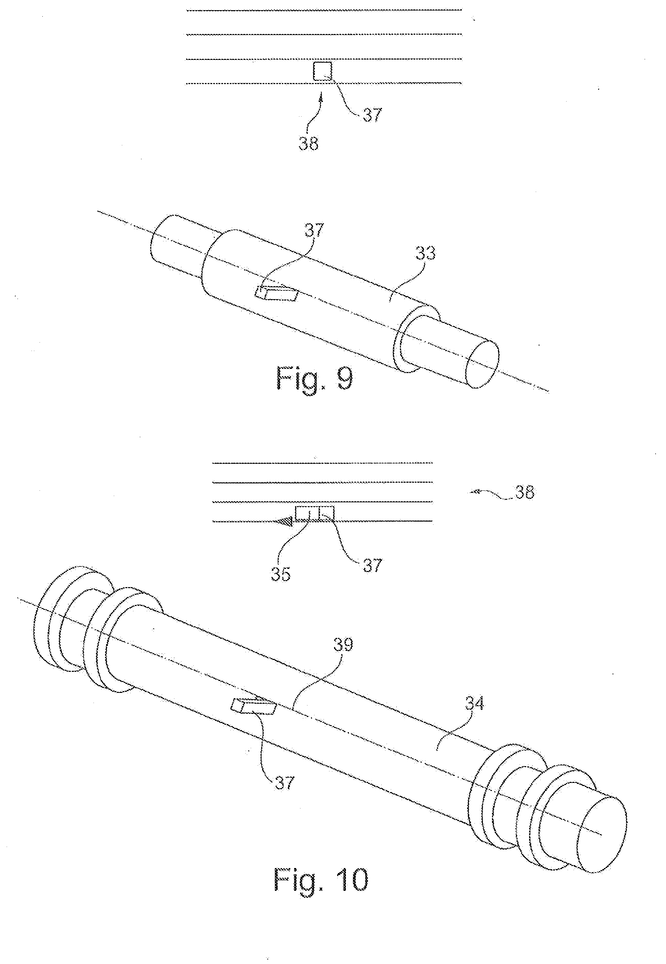

Der in Fig. 9 in perspektivischer Ansicht dargestellte erste Rotationskörper 33 (ganz innen liegend) weist einen Hauptpin 37 auf. Die Lage des Hauptpins 37 ist in Fig. 9 zusätzlich schematisch in einem Veranschaulichungsbereich 38 dargestellt. Dieser Veranschaulichungsbereich ist auch in den Fig. 10, 11 und 12 eingezeichnet).

In Fig. 10 ist der zweite Rotationskörper 34 dargestellt, in dem eine Nut 39 zur Aufnahme des Hauptpins 37 vorgesehen ist. Die Hauptnut 39 weist eine Abmessung auf, die es dem Hauptpin 37 ermöglicht, sich in Axialrichtung der Verstellmechanik 32 zu bewegen.

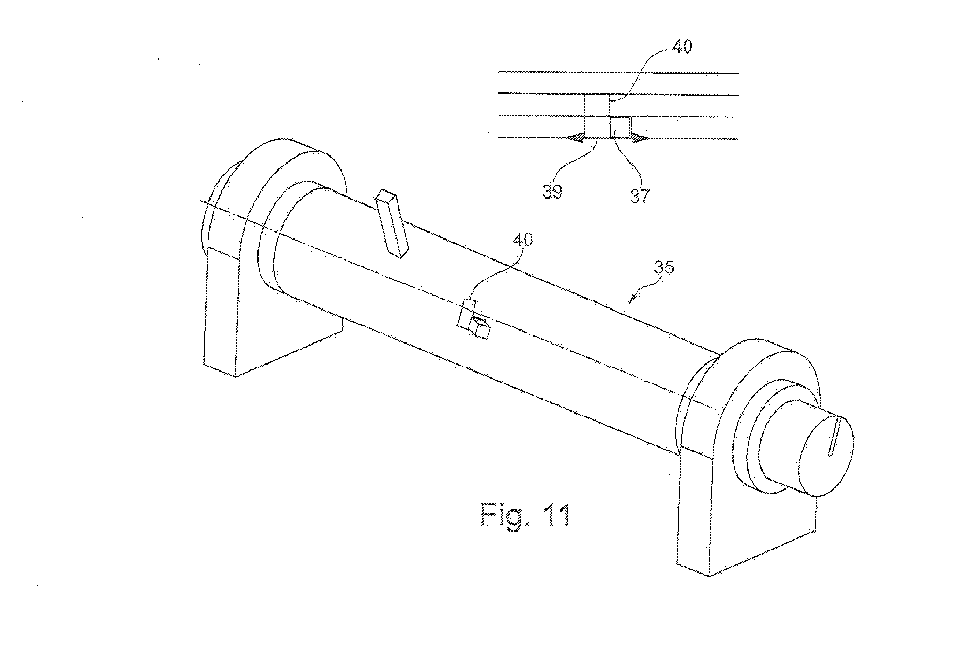

In Fig. 11 ist der dritte Rotationskörper 35 dargestellt. Der dritte Rotationskörper weist eine zweite Nut 40 mit einer L-förmigen Formgebung auf. Im Veranschaulichungsbereich 38 von Fig. 11 ist dabei ersichtlich, wie Hauptpin 37, erste Nut 39 und zweite Nut 40 relativ zueinander angeordnet sind.

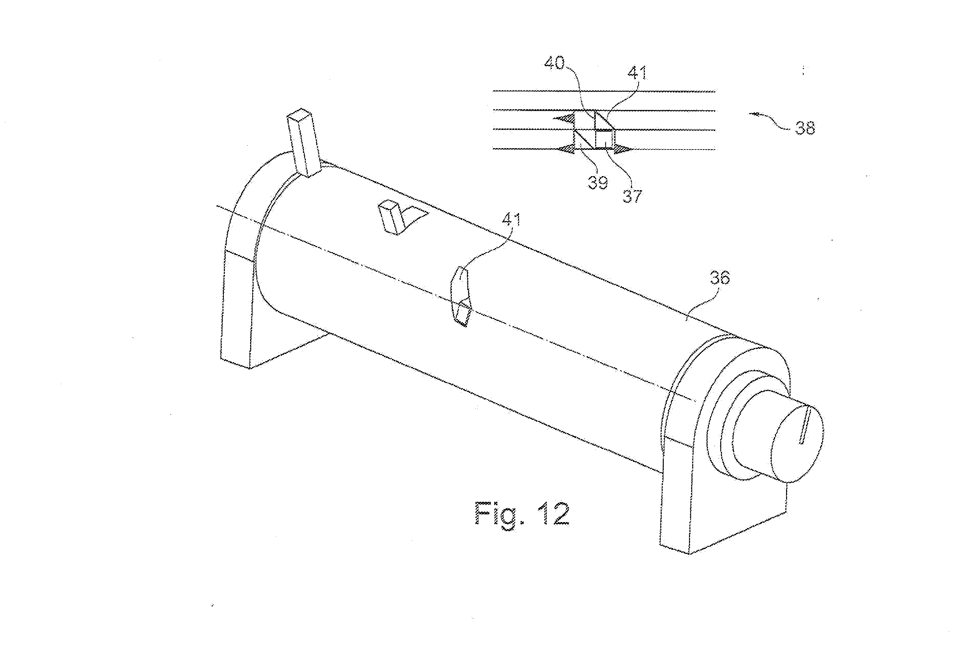

Schließlich ist in Fig. 12 noch der vierte Rotationskörper 36 dargestellt. Dieser vierte Rotationskörper 36 weist eine schräg verlaufende beredte Nut 41 auf, die - ebenso wie die erste Nut 39 und die zweite Nut 40 - den Hauptpin 37 des ersten Rotationskörpers 33 aufnimmt.

Wie insbesondere aus Fig. 8 entnommen werden kann, ist der zweite Rotationskörper 34 drehfest mit dem Bedienknopf 2 verbunden. Bei einer Bewegung des zweiten Rotationskörper 34 um seine Langsachse dreht sich der erste Rotationskörper 33 unter Vermittlung des von der ersten Nut 39 aufgenommenen ersten Pins 37 mit. Befindet sich der erste Rotationskörper 33 in einer Anfangsstellung benachbart zum Bedienknopf 2, so bewegt der erste Pin 37 aufgrund der Formgebung der zweiten Nut 40 den dritten Rotationskörper 35 zunächst mit. Gleichzeitig wird aufgrund der schräg verlaufenden, dritten Nut 41 (welche im vierten Rotationskörper 36 ausgebildet ist) der erste Rotationskörper 33 in axialer Richtung nach hinten (entfernt vom Bedienknopf 2) bewegt. Zu einem gewissen Zeitpunkt gerät daher der erste Pin 37 des ersten Rotationskörpers 32 außer Eingriff mit dem ersten Teilbereich der zweiten Nut 40, welche im dritten Rotationskörper 35 vorgesehen ist. Der dritte Rotationskörper 35 ist dann rotatorisch vom Bedienknopf 2 entkoppelt. Mit anderen Worten besteht nur in einem bestimmten Winkelbereich des Bedienknopfs 2 eine drehfeste Verbindung zwischen dem zweiten Rotationskörper 34 und dem dritten Rotationskörper 35 - und damit zwischen dem Bedienknopf 2 und den Fächerscheiben 5 der Luftleiteinheit 3.

Weiterhin kommt es aufgrund der Formgebung der dritten Nut 41 im vierten Rotationskörper 36 erst nach dem Durchlaufen eines bestimmten Verdrehwinkels des zweiten Rotationskörpers 34 (und damit des Bedienknopfes 2) zu einem mechanischen Mitnahmekontakt zwischen zweitem Rotationskörper 35 (Bedienknopf 2) und viertem Rotationskörper 36 (und damit der Verschlusseinheit 4).

Auch im vorliegenden zweiten Ausführungsbeispiel einer Komfort-Luftausströmerdüse 31 kommt es somit bei einer durchgängigen Betätigung des Bedienknopfes 2 zu einer aufeinander abfolgenden Betätigung von Luftleiteinheit 3 und Verschlusseinheit 4.

Für eine Drehbewegung des Bedienknopfs 2 in die Gegenrichtung erfolgen entsprechende Verstellbewegungen von Luftleiteinheit 3 und Verschlusseinheit 4 in umgekehrter Richtung.

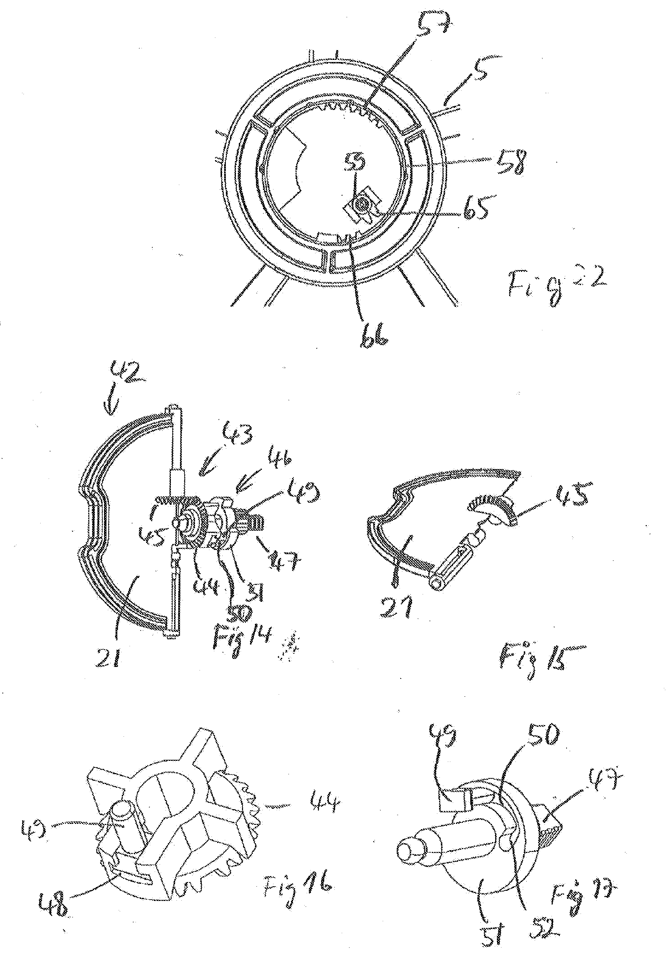

In den Fig. 14 bis 25 ist ein drittes Aüsführungsbeispiel für eine Komfort-Luftausströmerdüse 54 dargestellt, welche im Wesentlichen die gleiche Funktionalität wie die bereits vorab beschriebenen Komfort-Luftausströmerdüsen 1, 31 aufweist. Auch hier lässt sich eine grundsätzliche Unterteilung in einen Bedienknopf 2, eine Luftleiteinheit 3 sowie eine Verschlusseinheit 4 feststellen. Die Kinematik und Bauausführung der vorliegend, unter Bezugnahme auf die in Fig. 14 bis 25 näher beschriebenen Komfort-Lultausströmerdüse 54 weicht jedoch im Detail von den bereits vorab beschriebenen Komfort-Luftausströmerdüsen 1, 31 zum Teil deutlich ab. Dies schließt jedoch nicht aus, dass gewisse Baugruppen und/oder Eigenschaften der einzelnen, unterschiedlichen Ausführungsbeispiele von Komfort-Luftausströmerdüsen 1, 31, 54 miteinander kombiniert werden können, insbesondere wenn gegebenenfalls etwaige Anpassungsarbeiten an einzelnen Baugruppen durchgeführt werden.

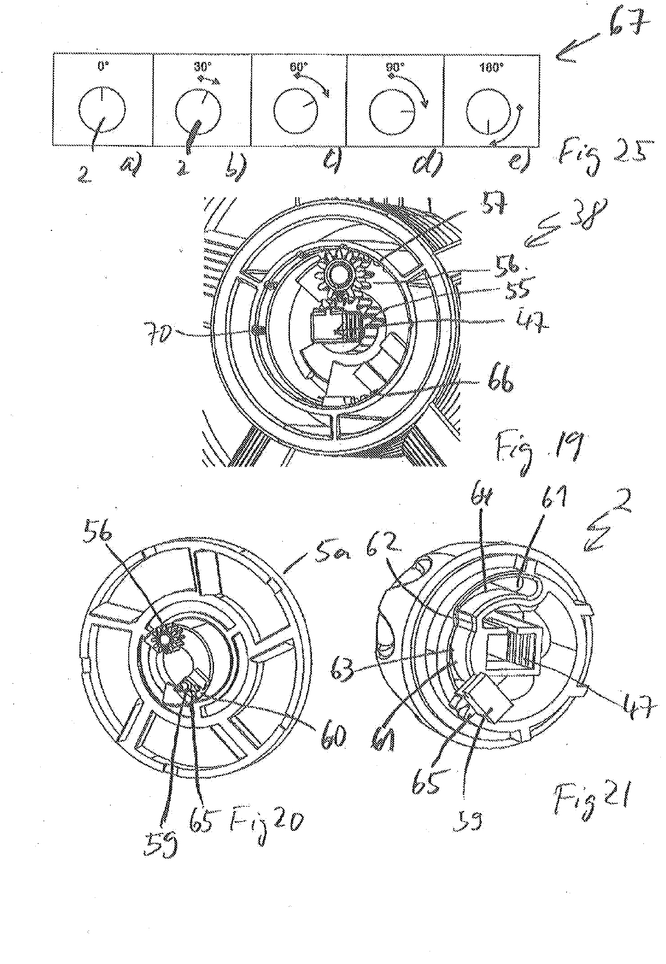

In Fig. 19 ist das dritte Ausführungsbeispiel einer Komfort-Luftausströmerdüse 54 in einer perspektivischen Ausschnittvergrößerung von hinten gesehen dargestellt. Auf der dem Bild abgewandten Seite ist der Bedienknopf 2 montiert (vergleiche auch mit Fig. 1, 2, 3 und 21). Durch eine vom Benutzer initiierte Drehbewegung des Bedienknopfes 2 wird die Drehachse 47 der Komfort-Luftausströmerdüse 54 in Bewegung gesetzt. Die Drehbewegung der Drehachse 47 wird über das Zahnradsegment 55 unter Vermittlung des Zahnringsegments 57 (mit nach innen gerichteten Zähnen) an das Zahnrad 56 weiter geleitet. Das Zahnringsegment 57 ist an der Innenseite der Lagerbuchse 58, auf der die unterschiedlichen Fächerscheiben 5 angeordnet sind, ausgebildet. Das Zahnrad 56 ist einteilig mit einer der Fächerscheiben 5, bevorzugt (wie im vorliegend dargestellten Ausführungsbeispiel der Komfort-Luftausströmerdüse 54) mit der dem Bedienknopf 2 benachbart liegenden Fächerscheibe 5a, ausgebildet (siehe insbesondere Fig. 20). Weiterhin ist an der "vorderen" der dem Beginnknopf 2 benachbarten) Fächerscheibe 5a neben dem Zahnrad 56 ein Verriegelungsstift 59 vorgesehen, welcher derart in einer T-förmigen Nut 60 derart gelagert ist, dass dieser in radialer Richtung (nach "innen" bzw. "außen") verschoben werden kann.

Mit Hilfe des Zahnrads 56 kann folglich die vordere Fächerscheibe 5a mithilfe des Bedienknopfs 2 in eine Drehbewegung versetzt werden. Diese Drehbewegung kann über entsprechende Mitnahmeelemente (wie oben beschrieben) auch an die anderen Fächerscheiben 5b .... 5g übertragen werden. Darüber hinaus kommt es während einer Drehbewegung des Bedienknopfes 2 zu einer Verschiebung des an der vorderen Fächerscheibe 5a vorgesehenen Verriegelungsstifts 59 in einer Kurvenbahn 61, welche an der Rückseite des Bedienknopfes 2 vorgesehen ist (vergleiche insbesondere mit Fig. 21). Wenn alle beweglichen Fächerscheiben 5 auf "Anschlag" gelaufen sind, ist der "Diffusmodus gesamt" erreicht. In dieser Position hat auch der Verriegelungsstift 59 den Übergangsbereich 62 zwischen dem radial inneren Teil 63 der Kurvenbahn 61 und dem radial äußeren Bereich 64 der Kurvenbahn 61 erreicht. Dadurch wird der Führungsstift 59 "nach außen" gezwungen, sodass die einstückig mit dem Verriegelungsstift 59 vorgesehenen Verriegelungszähne 65 mit dazu korrespondierenden Verriegelungszähnen 66 verrasten, welche auf der Innenseite der Lagerbuchse 58 angeordnet sind (siehe insbesondere Fig. 22). Durch diese Verriegelung werden alle Fächerscheiben 5 verriegelt. Ein selbständiges Verstellen des Luftausströmmodus (beispielsweise aus einen "Diffusmodus gesamt" heraus) ist damit nicht mehr möglich.

Da der Bedienknopf 2 noch weiter (beispielsweise im Uhrzeigersinn) verdreht werden muss, um das Klappventil 42 (siehe folgende Beschreibung sowie Figs. 14 bis 17) der Komfort-Luftausströmerdüse 54 verschließen zu können, obwohl der Verriegelungsstift 59 eingerastet ist (Verriegelungszähne 65 des Verriegelungsstifts 59 und Verriegelungszähne 66 der Lagerbuchse 58 greifen ineinander ein) ist die Lage und Winkelausdehnung des Zahnringsegments 57 auf der Innenseite der Lagerbuchse 58 so gewählt, dass das Zahnrad 56 in einem entsprechenden Betriebsbereich der Komfort-Luftausströmerdüse 54 außer Eingriff mit den Zähnen des Zahnringsegments 57 ist.

Das für das vorliegend beschriebene dritte Ausführungsbeispiel einer Komfort-Luftaussttömerdüse 54 verwendete Klappventil 42 (also die Verschlusseinheit 4) ist in Fig. 14 dargestellt. Das Klappventil 42 ist vorliegend in Fig. 14 lediglich in einer geöffneten Stellung dargestellt. Der Antrieb der beiden Klappenhälften 21 des Klappventils 42 (Öffnen und Schließen) erfolgt über ein Kegelzahnradgetriebe 43, bei dem zwei (zum Teil nur teilweise) ausgebildete Kegelzahnräder 44, 45 stirnseitig ineinander eingreifen. Wie man insbesondere Fig. 15 entnehmen kann, die eine einzelne Klappenhälfte 21 des in Fig. 14 gezeigten Klappventils 42 zeigt, ist das einstückig mit der Klappenhälfte 21 ausgebildete Kegelzahnrad 45 nur als "Teilkreis" ausgebildet und weist vorliegend eine Winkelerstreckung von etwas mehr als 180° auf. Insbesondere ist es möglich, die Klappenhälfte 21 und das Kegelzahnrad 45 als einstückige Einheit, beispielsweise unter Verwendung eines Spritzgussvorgangs aus Kunststoff herzustellen. Der Aufbau der Antriebseinheit 46 des Klappventils 42 ist in den Fig. 16 und 17 näher dargestellt. Das antriebsseitige Kegelzahnrad 44 des Kegelzahnradgetriebes 43 ist grundsätzlich freilaufend auf der Drehachse 47 gelagert und wird durch die beiden Kegelzahnräder 45 der beiden Klappenhälften 21 in Position gehalten. Weiterhin ist am Kegelzahnrad 43 eine hinterschnittene Führungsnut 48 vorgesehen, in der ein Mitnehmer 49 verschiebbar gelagert ist, Führungsnut 48 und Mitnehmer 49 sind dabei so ausgeformt und angeordnet, dass der Mitnehmer 49 lediglich in einer radialen Richtung des Kegelzahnrads 44 verschoben werden kann (also nach "innen" und nach "außen"). Der Mitnehmer 49 greift im fertig montierten Zustand in eine Kurvenbahn 50 ein, welche in einer Führungsscheibe 51 ausgebildet ist. Die Führungsscheibe 51 ist drehfest mit der Drehachse 47 verbunden. Insbesondere ist es auch möglich, dass die Drehachse 47 und die Führungsscheibe 51 als einstückige Einheit (beispielsweise unter Verwendung eines Kunststoff-Spritzgussvorgangs) ausgebildet sind.

Während der Drehbewegung von "Gesamtluft" zu "Diffusmodus gesamt" (siehe auch Fig. 25) läuft der Mitnehmer 49 in der Kurvenbahn 50 der Führungsscheibe 51 "leer" mit (das heißt, dass eine Drehung der Drehachse 47 keine Veränderung der Position der Khappenhälften 21 des Klappventils 42 bewirkt. Sobald jedoch die entsprechende tangentiale Endposition 52 der Kurvenbahn 50 erreicht ist (dies ist üblicherweise dann der Fall, wenn die Stellung Diffusmodus gesamt" erreicht ist), erfolgt eine Wirkkopplung zwischen Führungsscheibe 51 und Kegelzahnrad 44. Insbesondere im letzteren Fall (also Stellung "Diffusmodus gesamt" ist erreicht) erreicht der Mitnehmer 49 die Tasche 52, die am einen Ende der Kurvenbahn 50 vorgesehen ist, und wird in diese hinein gedrückt (aufgrund der leichten Anschrägung der Tasche 52). Dieses Verschieben des Mitnehmers 49 in radialer Richtung in die Tasche 52 hinein ist dank der Führungsnut 48 (vergleiche Fig. 16) möglich. Somit ergibt sich eine drehfeste Kopplung zwischen Führungsscheibe 51 (bzw. Drehachse 47) und Kegelzahnrad 44, was in einer Verstellung der Position der Klappenhälften 21 resultiert.

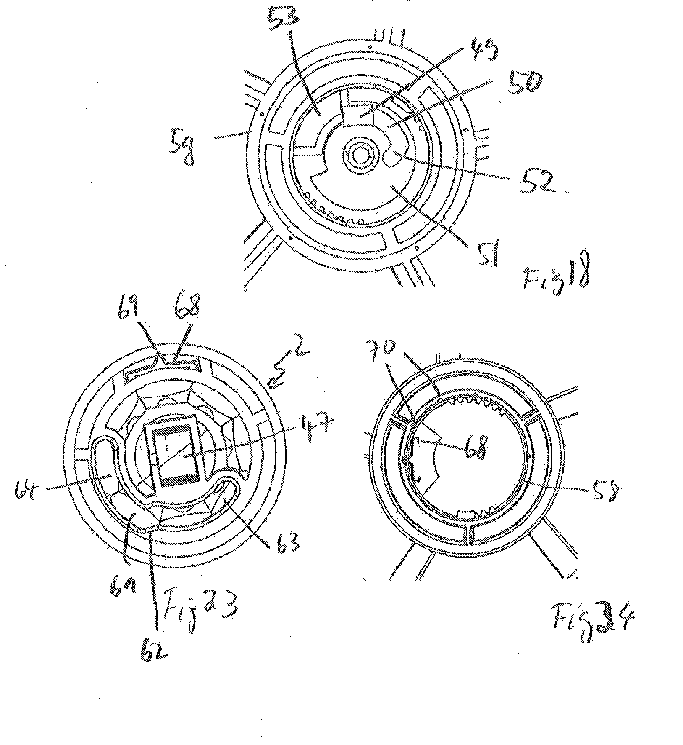

Damit die Klappenhälften 21 des Klappventils 42 in jeder Position gehalten werden und sich nicht selbständig bzw. durch Fremdeinwirkung (z. Bsp. hoher Luftstrom, Fahrbahnunebenheiten und dergleichen) verstellen können, ist an einer der Fächerscheiben 5 (üblicherweise an der Facherscheibe 5g, welche vom Bedienknopf 2 am weitesten entfernt angeordnet ist) eine Sicherungsrippe 53 angeordnet, die den Mitnehmer 49 in der Tasche 52 der Kurvenbahn 50 fixiert, wodurch eine Entkopplung von Drehachse 47 und Kegelzahnrad 44 vermieden wird. Daraus folgt, dass sich die Klappenhälften 21 des Klappenventils 42 nicht selbsttätig verstellen können. Die Anordnung der Sicherungsrippe 53 ist insbesondere aus Fig. 18 ersichtlich.

In Fig. 25 ist die für den Benutzer der Komfort-Luftausströmerdüse 54 (gegebenenfalls auch für die anderen beschriebenen Komfort-Luftausströmerdüsen 1, 31) ersichtliche Bewegungsabfolge 67 dargestellt. In der 0°-Stellung (Fig. 25a) befindet sich die Komfort-Luftausströmerdüse 54 in der Stellung "Gesamtluft". Dies ist die Grundstellung. In dieser Stellung sind die Fächerscheiben 5a...5g fluchtend zueinander angeordnet. Dreht der Benutzer den Bedienknopf 2 um 30° im Uhrzeigersinn (Fig. 25b), so ist die Stellung "Diffusmodus mit 1/3-Stellung" erreicht. Ein weiteres Verdrehen um 30° führt zu der in Fig. 25c gezeigten 60°-Stellung des Bedienknopfes in der Stellung Diffusmodus in 2/3-Stellung". Ein weiteres Bewegen um weitere 30° führt zu der in Fig. 25d gezeigten 90°-Position des Bedienknopfes 2, in der der "Diffusmodus gesamt" geschaltet ist. Dreht der Benutzer den Bedienknopf weiter (um weitere 90° in die in Fig. 26e gezeigte 180°-Stellung) so ist die Komfort-Luftausströmerdüse 54 in der Luftabsperr-Stellung. Die in Fig. 25 gezeigten Stellungen sind im Übrigen nicht nur beliebige Zwischenstellungen, sondern bei dem dritten Ausführungsbeispiel der Komfort-Luftausströmerdüse 54 vielmehr ausgezeichnete Stellungen, in denen der Bedienknopf 2 für den Benutzer merklich in die jeweilige Position einrastet.

Die Mechanik, die dieses Einrasten in die jeweilige Position bewirkt, ist in den Fig. 23 und 24 näher erläutert. In Fig. 23 ist der Bedienknopf 2 in einer direkten Draufsicht von unten zu erkennen. Wie man der Fig. 23 entnehmen kann, ist in einem Bereich ein Federelement 68 vorgesehen, welches eine vorspringende Nase 69 aufweist. Aufgrund der federnden Eigenschaften des Federelements 68 kann die Nase 69 (elastisch verformbar) radial nach innen gedrückt werden, versucht jedoch in ihre Ausgangsposition zurückzukehren. Die Nase 69 des Federelements 68 schnappt dabei in Positionsnuten 70 ein, welche auf der Innenseite der Lagerbuchse 58 der Komfort-Luftausströmerdüse 54 vorgesehen sind (auch in Fig. 19 gut zu erkennen). Im vorliegend dargestellten dritten Ausführungsbeispiel einer Komfort-Luftausströmerdüse 54 sind dabei die Positionsnuten 70 mit einem Abstand von jeweils 30 Winkelgrad angeordnet.

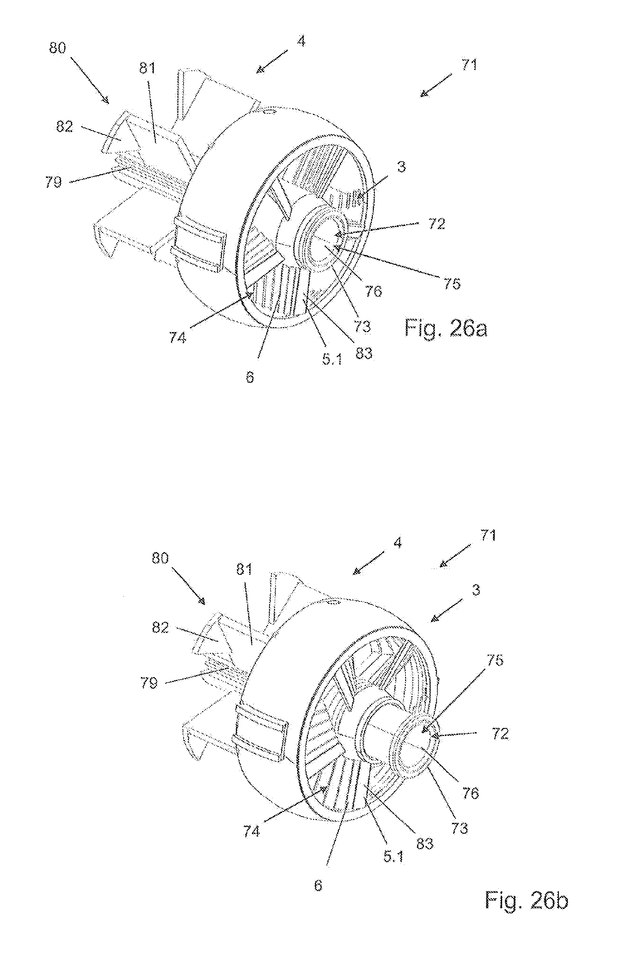

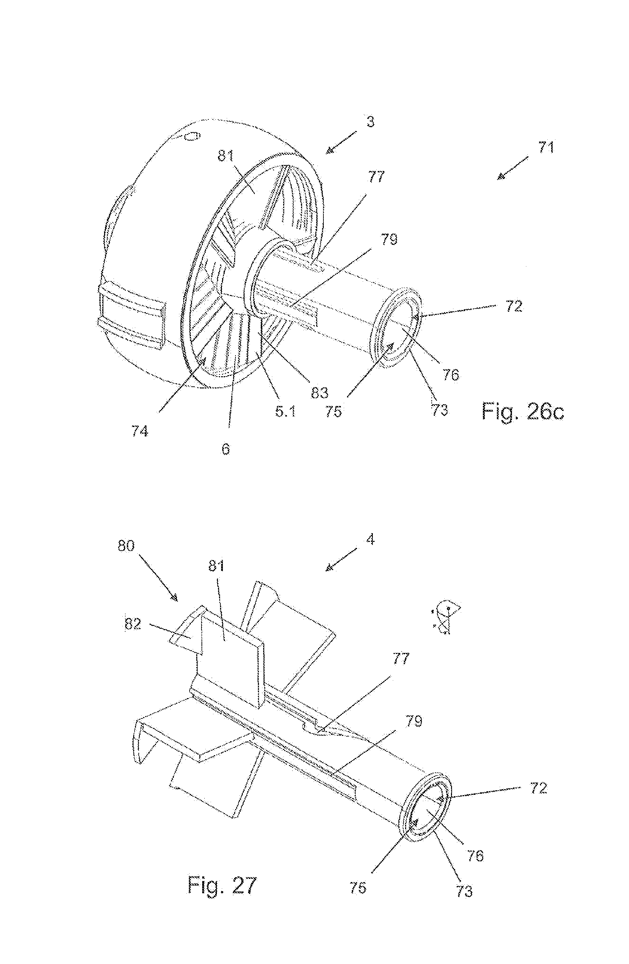

In Fig. 26 ist ein weiteres Beispiel für eine mögliche Bauform einer Komfort-Luftausströmerdüse 71 dargestellt. Dabei zeigen die Fig. 26a, 26b und 26c die Komfort-Luftausströmerdüse 71 jeweils in unterschiedlichen Betriebspositionen. Fig. 26 a zeigt die Komfort-Luftausströmerdüse 71 in einem Modus "Gesamtluft" mit vollem Luftdurchsatz. Fig. 26b zeigt die Komfort-Luftausströmerdüse 71 in einem Modus "diffus gesamt". In diesem Betriebsmodus "diffus gesamt" Leerzeichen befindet sich die Komfort-Luftausströmerdüse 71 in einer Stellung, in der der Luftstrom im Wesentlichen ungehindert durch die Komfort-Luftausströmerdüse 71 hindurch tritt, dabei jedoch verdrallt wird, sodass eine diffuse Luftausströmung entsteht. In Fig. 26c schließlich befindet sich die Komfort-Luftausströmerdüse 71 in einem Modus "diffus geschlossen", in der im Wesentlichen keine Luftströmung durch die Komfort-Luftausströmerdüse 71 hindurch tritt.

Die Verstellung der Komfort-Luftausströmerdüse 71 erfolgt bei der vorliegenden Bauform einer Komfort-Luftausströmerdüse 71 durch Herausziehen bzw. Hineindrücken des Bedienrohrs 72. Um insbesondere das Herausziehen des Bedienrohrs 72 zu vereinfachen, ist das Bedienrohr 72 ah seinem vorderen Ende mit einem Griffring 73 versehen, an dem das Bedienrohr 72 leicht gegriffen werden kann. Das Bedienrohr 72 dient dabei sowohl der Verstellung des Betriebsmodus zwischen "diffus" und "Gesamtluft" (die Verstellung erfolgt durch Drücken beziehungsweise Ziehen des Bedienrohrs 72), der Verstellung des Betriebsmodus zwischen "offen" und geschlossen" (bezüglich der Verschlusseinheit; die Verstellung erfolgt durch Ziehen bzw. Drücken des Bedienrohrs 72), als auch der Verstellung der Richtung der von der Kornfort-Luftausströmerdüse 71 freigesetzten Luftströmung (die Verstellung erfolgt durch "Kippen" des Bedienrohrs 72).

Der Betriebsmodus "diffus", "Gesamtluft" bzw. Zwischenstellungen hiervon bezieht sich dabei bei der vorliegend dargestellten Komfort-Luftausströmerdüse 71 ausschließlich auf den äußeren Luftleitbereich 74, der mit einer Luftleineinheit 3 versehen ist, wobei die Luftleiteinheit 3 ähnlich zu den bereits vorab beschriebenen Ausführungsbeispielen von Komfort-Luftausströmerdüsen 1, 31, 54 angular gegeneinander verstellbare Fächerscheiben 5a, 5b, ... aufweist, die durch ihre relative Position zueinander Luftleitschaufeln 6 bilden. Neben diesem äußeren Luftleitbereich 74 weist die Komfort-Luftausströmerdüse 71 jedoch auch einen inneren Luftleitbereich 75 auf. Wie aus Fig. 26 ersichtlich ist (vergleiche auch mit den Fig. 27 bis 29) ist das Bedienrohr 72 als durchgehendes Rohr ausgebildet, weist also in seinem Inneren einen (wenn auch nicht notwendigerweise kreiszylindrischen) Hohlraum 76 auf. Durch diesen Hohlraum 76 kann ebenfalls Luft hindurch treten, wobei die durch das Bedienrohr 72 hindurch tretende Luftströmung als gerichtete Spot-Luftstrahl austritt. Selbstverständlich sind hier auch andere Bauformen denkbar, wie beispielsweise Bauformen, bei denen im Hohlraum 76 die Luftströmung verdrillende (zum Beispiel beweglich oder starre angeordnete) Luftleitrichtungen angeordnet sind, oder bei denen eine Luftdurchströmung des Bedienrohrs 72 durch ein Verschlusselement verhindert wird. Auch können beispielsweise aus ästhetischen Erwägungen heraus luftdurchlässige Abdeckgitter oder dergleichen vorgesehen werden.

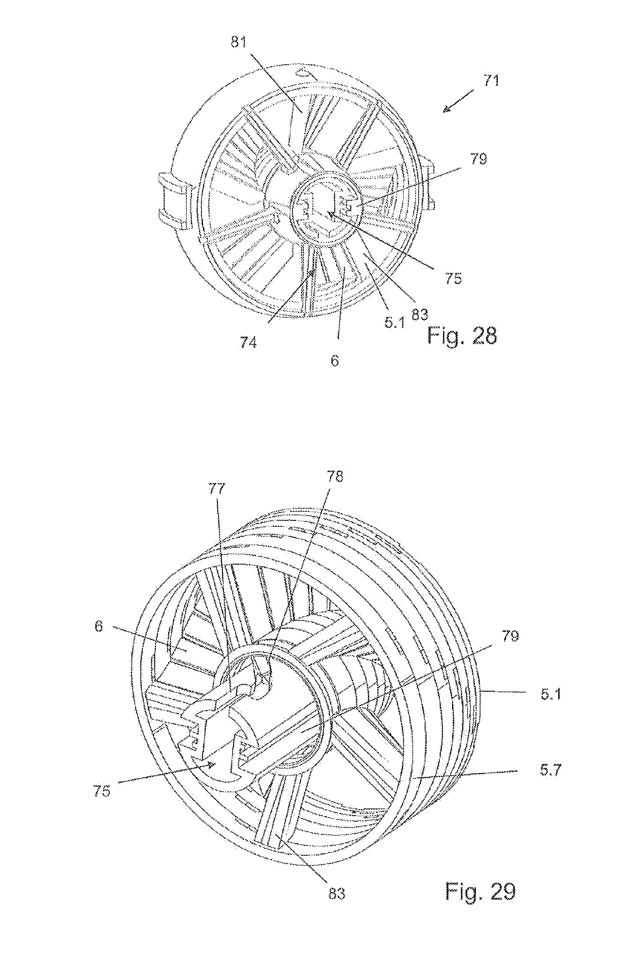

Um die Verschiebebewegung des Bedienrohrs 72 (Ziehen bzw. Drücken) in eine für die Verstellung der Luftleiteinheit 3 erforderliche Drehbewegung umzusetzen, ist das Bedienrohr 72 an seiner Außenseite mit einer Kurvenbahn 77 (siehe insbesondere Fig. 26c., Fig. 27 und Fig. 29) versehen. In die Kurvenbahn 77 greift ein Führungssatift 78 ein (siehe insbesondere Fig. 29), der mit einer endständigen Fächerscheibe 5 (vorliegend Fächerscheibe 5.7) verbunden ist. Die Drehbewegung dieser endständigen Fächerscheibe 5.7 auf die sonstigen Fächerscheiben 5.1 bis 5.6 erfolgt in analoger Weise zur oblgen Beschreibung. Da sich das Bedienrohr 72 nicht gegenüber dem Gehäuse der Komfort-Luftausströmerdüse 71 verdrehen darf (obwohl über die Fächerscheibe 5.7 und die den Führungsstift 78 ein Drehmoment auf das Bedienrohr 72 einwirkt), ist das Bedienrohr 72 auf seiner Außenseite über eine gewisse Länge hinweg mit einem Führungsprofil 79 versehen, mit dem das Führungsrohr 72 relativ zum Gehäuse der Komfort-Luftausströmerdüse 71 drehfest gelagert ist.

Die Verschlusseinheit 4 der vorliegend dargestellten Komfort-Luftausströmerdüse 71 ist aus einer Anzahl von Absperrklappen 80 gebildet, die jeweils eine Klappenwand 81 sowie einen kreissegmentartigen Vorsprung 82 aufweisen (vergleiche insbesondere Fig. 27). Im vorliegend dargestellten Ausführungsbeispiel weist die Verschlusseinheit 4 insgesamt fünf Absperrklappen 80 auf. Die Anzahl der Absperrklappen 80 sollte dabei mit der Anzahl der Luftleitschaufeln 6 (vorliegend ebenfalls fünf) übereinstimmen. Weiterhin sind die Absperrklappen 80 vorliegend integral mit dem Bedienrohr 72 ausgebildet (siehe insbesondere Fig. 27). Beispielsweise kann eine einstückige Einheit aus Bedienrohr 72 und Verschlusseinheit 4 durch einen Kunststoffspritzgussvorgang (gegebenenfalls einen mehrkomponentigen Spritzgussvorgang, bei dem auch eine Weichkomponente insbesondere im Bereich der Absperrklappen 80 und/oder des Griffrings 73 vorgesehen werden kann) ausgebildet werden. Hierdurch kann ein besonders kostengünstiger und einfacher Aufbau der Komfort-Luftausströmerdüse 71 gewährleistet werden.

Die Luftabsperrung erfolgt bei der vorliegenden Komfort-Luftausströmerdüse 71 durch eine Interaktion zwischen den Klappenwänden 81 der Absperrklappen 80 und den entsprechenden Seitenkanten der einzelnen luftleitflügel 83 der endständigen Fächerscheiben 5 (vorliegend 5.1 und 5.7). Dadurch, dass die Verschlusswirkung durch eine Interaktion der Absperrklappen 80 mit einem ohnehin vorzusehenden Bauteil (nämlich den Luftleitschaufeln 6 bzw, den Luftleitflügeln 83) erfolgt, können die Absperrklappen 80 besonders klein und mit einem besonders geringen Luftanströmquerschnitt versehen werden. Dadurch kann im geöffneten Zustand der Komfort-Luftausströmerdüse 71 ein besonders hoher Luftdurchsatz gewährleistet werden und darüber hinaus ein kostengünstiger Aufbau der Komfort-Luftausströmerdüse 71 gewährleistet werden. Die zusätzlich an den Absperrklappen 80 vorgesehenen kreissegmentartigen Vorsprünge 82 bewirken dabei eine gesteigerte Dichtigkeit der Komfort-Luftausströmerdüse 71 im geschlossenen Zustand, sowie eine gewisse "Vorverdrallung" des Luftstroms, der durch die Komfort-Luftausströmerdüse 71 hindurch tritt.

Selbstverständlich ist es möglich, auch den Aufbau der Komfort-Luftausströmerdüse 71 zu variieren, beispielsweise dahingehend, dass durch ein Ziehen ein geöffneter Zustand der Komfort-Luftausströmerdüse 71 (und dementsprechend durch ein Drücken ein geschlossener Zustand) realisiert wird. Auch können die vorliegend Im Zusammenhang mit dem vierten Ausführungsbeispiel einer Komfort-Luftausströmerdüse 71 dargestellten Ideen in beliebiger Weise mit Merkmalen der übrigen, bereits beschriebenen Komfort-Luftausströmerdüse 1, 31, 54 (gegebenenfalls nach einer geeigneten Modifikation) kombiniert werden.

### Bezugszeichenliste

- 1.: Komfort-Luftausströmerdüse
- 2.: Bedienknopf
- 3.: Luftleiteinheit
- 4.: Verschlusseinheit
- 5.: Fächerscheiben
- 6.: Luftleitschaufeln
- 7.: Verstellmechanik
- 8.: Betätigungsring
- 9.: erster Mitnehmer
- 10.: zweiter Mitnehmer
- 11.: Fixring
- 12.: Koppelstift
- 13.: Koppelstift
- 14.: Koppelbereich
- 15.: Koppelbereich
- 16.: Klappventil
- 17.: Drehstift
- 18.: Drehhebel
- 19.: Nase
- 20.: Führungsschiene
- 21.: Klappenhälfte
- 22.: Luftdurchführungskanal
- 23.: Abszisse
- 24.: Ordinate
- 25.: Aufnahmebereich
- 26.: Aufnahmenut
- 27.: Aufnahmenut
- 28.: Anschlagbereich
- 29.: Aufnahmenut
- 30.: Aufnahmenut
- 31.: Komfort-Luftausströmerdüse
- 32.: Vertellmechanik
- 33.: erster Rotationskörper
- 34.: zweiter Rotationskörper
- 35.: dritter Rotationskörper
- 36.: vierter Rotationskörper
- 37.: Pin
- 38.: Veranschaulichungsbereich
- 39.: erste Nut
- 40.: zweite Nut
- 41.: dritte Nut
- 42.: Klappventil
- 43.: Kegelzahnradgetriebe
- 44.: Kegelzahnrad
- 45.: Kegelzahnrad
- 46.: Antriebseinheit
- 47.: Drehachse
- 48.: Führungsnut
- 49.: Mitnehmer
- 50.: Kurvenbahn
- 51.: Führungsscheibe
- 52.: Tasche
- 53.: Sicherungsrippe
- 54.: Komfort-Luftausströmerdüse
- 55.: Zahnradsegment
- 56.: Zahnrad

- 57.: Zahnringsegment
- 58.: Lagerbuchse
- 59.: Verriegelungsstift
- 60.: T-förmige Nut
- 61.: Kurvenbahn
- 62.: Üergangsbereich
- 63.: innerer Teil
- 64.: äußerer Teil
- 65.: Verriegelungszähne
- 66.: Verriegelungszähne
- 67.: Bewegungsabfolge
- 68.: Federelement
- 69.: Nase
- 70.: Positionsnuten
- 71.: Komfort-Luftausströmerdüse
- 72.: Bedienrohr
- 73.: Griffring
- 74.: Äußerer Luftleitbereich
- 15.: Innerer Luftleitbereich
- 76.: Hohlraum
- 77.: Kurvenbahn
- 78.: Führungsstift
- 79.: Führungsprofil
- 80.: Absperrklappe
- 81.: Klappenwand
- 82.: Vorsprung
- 83.: Luftleitflügel

## Patentansprüche

1. Luftausströmvorrichtung (1, 31, 54, 71) zum Ausströmen eines Luftstroms, insbesondere in einen Fahrzeuginnenraum, mit mindestens einer verstellbaren Luftleiteinrichtung (3) und mindestens einer verstellbaren Luftabsperreinrichtung (4, 80), mit einem Bedienelement (2, 72), mit dem sowohl die zumindest eine Luftleiteinrichtung (3), als auch die zumindest eine Luftabsperreinrichtung (4, 80) verstellbar ist, wobei sowohl die zumindest eine Luftleiteinrichtung (3), als auch die zumindest eine Luftabsperreinrichtung (4, 80) zumindest teilweise und/oder zumindest bereichsweise durch eine gleichartige Verstellbewegung des Bedienelements (2, 72) verstellbar sind und die Verstellung der zumindest einen Luftleiteinrichtung (3) sowie der zumindest einen Luftabsperreinrichtung (4, 80) nacheinander, insbesondere mehrfach nacheinander, erfolgbar ist, **dadurch gekennzeichnet, dass** die Reihenfolge der Verstellung der Luftleiteinrichtung (3) sowie der Verstellung der Luftabsperreinrichtung (4, 80) bei einer Betätigung des Bedienelements (2, 72) unabhängig von der Verstellbewegung des Bedienelements (2, 72) zumindest bereichsweise im Wesentlichen die gleiche ist.

2. Luftausströmvorrichtung (1, 31, 54, 71) nach Anspruch 1, **dadurch gekennzeichnet, dass** die Reihenfolge der Verstellung der Luftleiteinrichtung (3) sowie der Verstellung der Luftabsperreinrichtung (4, 80) bei einer Betätigung des Bedienelements (2, 72) zumindest bereichsweise in Abhängigkeit von der Verstellbewegung des Bedienelements (2, 72) änderbar ist.

3. Luftausströmvorrichtung (1, 31, 54, 71) nach einem der vorangehenden Ansprüche, **dadurch gekennzeichnet, dass** die zumindest eine Luftleiteinrichtung (3) und die zumindest eine Luftabsperreinrichtung (4, 80) zumindest teilweise und/oder zumindest bereichsweise durch verschiedenartige Verstellbewegungen des Bedienelements (2, 80) verstellbar sind.

4. Luftausströmvorrichtung (1, 31, 54, 71) nach einem der vorangehenden Ansprüche, **dadurch gekennzeichnet, dass** zumindest eine der Verstellbewegungen aus der Gruppe von Verstellbewegungen entnommen ist, weiche eine angulare Verstellbewegung, eine axiale Verstellbewegung, eine radiale Verstellbewegung und eine translatorische Verstellbewegung aufweist.

5. Luftausströmvorrichtung (1, 31, 54, 71) nach einem der vorangehenden Ansprüche, **gekennzeichnet durch** zumindest eine Verstellwegübertragungseinrichtung (77, 78), welche insbesondere derart ausgebildet und eingerichtet ist, dass die Art der Verstellbewegung zumindest teilweise und/oder zumindest bereichsweise änderbar ist.

## Claims

1. An air discharging device (1, 31, 54, 71) for discharging an airflow, in particular into a vehicle interior, comprising at least one adjustable air conducting unit (3) and at least one adjustable air shut-off unit (4, 80), comprising an operating element (2, 72) with which both the at least one air conducting unit (3) and the at least one air shut-off unit (4, 80) can be adjusted, wherein both the at least one air conducting unit (3) and the at least one air shut-off unit (4, 80) are adjustable at least in part and/or at least in regions by an identical adjustment movement of the operating element (2, 72) and the adjustment of the at least one air conducting unit (3) and also of the at least one air shut-off unit (4, 80) can be performed in succession, in particular a number of times in succession, **characterised in that** the order of the adjustment of the air conducting unit (3) and of the adjustment of the air shut-off unit (4, 80) in the event of an actuation of the operating element (2, 72) is substantially the same, at least in regions, irrespective of the adjustment movement of the operating element (2, 72).

2. The air discharging device (1, 31, 54, 71) according to claim 1, **characterised in that** the order of the adjustment of the air conducting unit (3) and of the adjustment of the air shut-off unit (4, 80) in the event of an actuation of the operating element (2, 72) can be changed at least in regions depending on the adjustment movement of the operating element (2, 72).

3. The air discharging device (1, 31, 54, 71) according to one of the preceding claims, **characterised in that** the at least one air conducting unit (3) and the at least one air shut-off unit (4, 80) are adjustable at least in part and/or at least in regions by different types of adjustment movements of the operating element (2, 80).

4. The air discharging device (1, 31, 54, 71) according to one of the preceding claims, **characterised in that** at least one of the adjustment movements is taken from the group of adjustment movements comprising an angular adjustment movement, an axial adjustment movement, a radial adjustment movement and an adjustment movement in translation.

5. The air discharging device (1, 31, 54, 71) according to one of the preceding claims, **characterised by** at least one adjustment path transfer unit (77, 78), which in particular is configured and set up such that the type of adjustment movement can be changed at least in part and/or at least in regions.

## Revendications

1. Dispositif de diffusion d'air (1, 31, 54, 71) servant à la diffusion d'un flux d'air, en particulier dans l'habitacle d'un véhicule, comprenant au moins un dispositif déflecteur d'air réglable (3) et au moins un dispositif d'arrêt d'air réglable (4, 80), et comprenant un élément de commande (2, 72) avec lequel on peut régler aussi bien le dispositif déflecteur d'air (3) au moins au nombre de un que le dispositif d'arrêt d'air (4, 80) au moins au nombre de un, où aussi bien le dispositif déflecteur d'air (3) au nombre de un que le dispositif d'arrêt d'air (4, 80) au moins au nombre de un sont réglables au moins partiellement et / ou au moins par zones, par un mouvement de réglage similaire de l'élément de commande (2, 72), et le réglage du dispositif déflecteur d'air (3) au moins au nombre de un ainsi que du dispositif d'arrêt d'air (4, 80) au moins au nombre de un peut être effectué successivement, en particulier plusieurs fois de façon successive, **caractérisé en ce que** l'ordre suivant lequel est effectué le réglage du dispositif déflecteur d'air (3) ainsi que le réglage du dispositif d'arrêt d'air (4, 80), lors d'un actionnement de l'élément de commande (2, 72), est sensiblement le même, au moins par zones, indépendamment du mouvement de réglage de l'élément de commande (2, 72).

2. Dispositif de diffusion d'air (1, 31, 54, 71) selon la revendication 1, **caractérisé en ce que** l'ordre suivant lequel est effectué le réglage du dispositif déflecteur d'air (3) ainsi que le réglage du dispositif d'arrêt d'air (4, 80), lors d'un actionnement de l'élément de commande (2, 72), est modifiable, au moins par zones, en fonction du mouvement de réglage de l'élément de commande (2, 72).

3. Dispositif de diffusion d'air (1, 31, 54, 71) selon l'une ou l'autre des revendications précédentes, **caractérisé en ce que** le dispositif déflecteur d'air (3) au moins au nombre de un et le dispositif d'arrêt d'air (4, 80) au moins au nombre de un sont réglables au moins partiellement et / ou au moins par zones, par des mouvements de réglage de nature différente de l'élément de commande (2, 80).

4. Dispositif de diffusion d'air (1, 31, 54, 71) selon l'une quelconque des revendications précédentes, **caractérisé en ce qu'**au moins l'un des mouvements de réglage est extrait du groupe de mouvements de réglage, lequel mouvement de réglage ainsi extrait présente un mouvement de réglage angulaire, un mouvement de réglage axial, un mouvement de réglage radial et un mouvement de réglage par translation.

5. Dispositif de diffusion d'air (1, 31, 54, 71) selon l'une quelconque des revendications précédentes, **caractérisé par** au moins un dispositif de transmission de course de réglage (77, 78) qui est conçu et agencé en particulier de manière telle, que la nature du mouvement de réglage soit modifiable au moins partiellement et / ou au moins par zones.
